# EUROPEAN PATENT APPLICATION

(11) **EP 4 644 439 A1**
(43) Date of publication of application: **05.11.2025**
(21) Application number: 23912286.4
(22) Date of filing: 27.12.2023
(51) Int. Cl.: C08F 212/00, C08F 4/6592, C08F 232/00

(54) **COPOLYMER, PRODUCING METHOD FOR SAME, AND CURED BODY CONTAINING COPOLYMER**

(30) Priority: 27.12.2022 JP 2022210778; 01.08.2023 JP 2023125660
(71) Applicant: Denka Company Limited, Tokyo 103-8338 (JP)
(72) Inventor: ARAI,Toru, Tokyo 103-8338 (JP); MAEDA,Yuta, Tokyo 103-8338 (JP); KANTO,Ryosuke, Tokyo 103-8338 (JP); NAKANO,Tatsuya, Tokyo 103-8338 (JP); ISHIGAKI,Yuhei, Tokyo 103-8338 (JP)
(74) Representative: Gulde & Partner
(86) International application number: PCT/JP2023/047110
(87) International publication number: WO 2024/143509

(57) **Abstract**

Provided is a novel copolymer having excellent low dielectric properties in an uncured state, exhibiting a high elastic modulus at room temperature. An α-olefin-cyclic olefin-aromatic polyene copolymer has, in an uncured state, a dielectric constant of less than 2.4 and a dielectric tangent of less than 0.0008 at a measurement frequency of 40 GHz, and a storage modulus of 1000 MPa or more as measured at 25°C.

## Description

### FIELD OF THE INVENTION

The present invention relates to a copolymer, a production method thereof, and a cured product containing the copolymer.

### BACKGROUND OF THE INVENTION

Along with the shift of communication frequency to gigahertz bands and frequency bands higher than those, needs for multilayer substrate made of CCL or FCCL including insulating materials having low dielectric properties have increased. Although fluorine-based resins such as perfluoroethylene have characteristics of excellent low dielectric constant, low dielectric loss, and excellent heat resistance, they have difficulties in moldability and film formability and problems with adhesion to a copper foil of wiring. Accordingly, application of fluorine-based resins to a multilayer substrate is difficult. Meanwhile, although substrates and insulating materials using post-curable resins such as epoxy resins, unsaturated polyester resins, polyimide resins, and phenol resins have been widely used due to the heat resistance and easy handling, improvement is required as insulating materials for high frequencies due to relatively high dielectric constants and dielectric losses (Patent Literature 1).

Hence, attention has been focused on hydrocarbon-based resins having inherently low dielectric properties. In particular, cyclic olefin-based (co)polymers with high glass transition temperatures (Tg) have been proposed as the main insulating material of thermoplastic resin (Patent Literature 2 and 3). However, since the glass transition temperature thereof is close to the solder reflow temperature, crosslinkable or curable resins are preferable in consideration of process suitability and process window. In order to turn a hydrocarbon-based resin, which is originally a thermoplastic resin, into a curable resin, it is necessary to introduce a crosslinkable functional group. However, radicals or functional groups reactable with heat generally have polarity, which deteriorates the low dielectric properties. In the case of attempting to introduce a functional group composed of hydrocarbons only such as aromatic vinyl group, an intermolecular reaction between expensive hydrocarbon-based raw materials is often utilized (Patent Literature 4), which is not economical in many cases. In Patent Literature 5, a cured product obtained using a specific coordination polymerization catalyst, including an ethylene-olefin (aromatic vinyl compound)-aromatic polyene copolymer and a non-polar vinyl compound copolymer, with a specific composition and formulation, is shown. In the technique, only one of the two vinyl groups of an aromatic polyene (divinylbenzene) is selectively copolymerized and the remaining vinyl group is preserved, so that it is easy to obtain a crosslinkable hydrocarbon copolymer macromonomer having an aromatic vinyl functional group. A cured product obtained from a composition including a similar olefin-aromatic vinyl compound-aromatic polyene copolymer, auxiliary raw materials, etc., has characteristics including a low dielectric constant and a low dielectric loss tangent, and provides a wide range of physical properties from soft to hard through selection of the composition and appropriate auxiliary raw materials (Patent Literature 6 and 7). However, the olefin-aromatic vinyl compound-aromatic polyene copolymer specifically described is relatively soft, and blending a large amount of other crosslinkable hard resins or inorganic fillers is required for hardening. Here, the known crosslinkable hard resins have insufficient low dielectric properties, and there is a problem that the low dielectric properties of the cured product decrease resulting from blending a large amount the hard resins. In the case where a relatively large amount of inorganic filler is blended, the dielectric constant of the resulting cured product increases, in particular, due to a high dielectric constant the inorganic filler generally has. It is important that a cured product is hard and has a high glass transition temperature (Tg) at the same time, which allows a low coefficient of linear expansion (CTE) in the processing temperature range of the production process for electronic circuit components including a solder reflow process to be exhibited. Accordingly, hard resins with higher glass transition temperature are in demand. Furthermore, insulating materials used in substrates and the like are made by mixing and curing various resins, fillers, flame retardants, and other raw materials, and high compatibility with these raw materials is also required. In particular, since resins and flame retardants contain a large amount of aromatic groups to obtain stability and flame retardancy at high temperature, crosslinkable hard materials that are highly compatible with these are in demand. For the above reasons, there is a demand for materials that are crosslinkable, of which cured products have excellent low dielectric properties, a high glass transition temperature, and a high elastic modulus at room temperature and high temperature.

### PRIOR ART

### Patent Literature

[Patent Literature 1] Japanese Patent Laid-Open No. 6-192392
[Patent Literature 2] International Publication No. WO 1998/56011
[Patent Literature 3] Japanese Patent Laid-Open No. 2016-037045
[Patent Literature 4] Japanese Patent Laid-Open No. 2004-087639
[Patent Literature 5] Japanese Patent Laid-Open No. 2007-217706
[Patent Literature 6] International Publication No. WO 2021/112087
[Patent Literature 7] International Publication No. WO 2021/112088

### SUMMARY OF THE INVENTION

### TECHNICAL PROBLEM

However, the conventional art described above does not describe whether the α-olefin-cyclic olefin-aromatic vinyl compound-aromatic polyene copolymers in an uncured state has low dielectric properties, high glass transition temperature, and high elastic modulus at sufficient level, respectively.

### SOLUTION TO PROBLEM

In view of the problem described above, an object of the present invention is to provide a novel crosslinkable copolymer (polymer compound) including an α-olefin-cyclic olefin-aromatic vinyl compound-aromatic polyene copolymer having a low dielectric constant even in an uncured state, a high glass transition temperature, and a high elastic modulus at room temperature and high temperatures, and a cured product thereof.

In other words, the present invention provides the following aspects.

### Aspect 1:

An α-olefin-cyclic olefin-aromatic polyene copolymer, having, in an uncured state, a dielectric constant of less than 2.4 and a dielectric tangent of less than 0.0008 at a measurement frequency of 40 GHz, and a storage modulus of 1000 MPa or more as measured at 25°C.

### Aspect 2:

An α-olefin-cyclic olefin-aromatic vinyl compound-aromatic polyene copolymer, having, in an uncured state, a dielectric constant of less than 2.4 and a dielectric tangent of less than 0.0008 at a measurement frequency of 40 GHz, and a storage modulus of 1000 MPa or more as measured at 25°C.

### Aspect 3

The copolymer according to aspect 1 or 2, wherein the copolymer in an uncured state has the dielectric constant of less than 2.3 and the dielectric tangent of less than 0.0004 at a measurement frequency of 40 GHz.

### Aspect 4

The copolymer according to any one of aspects 1 to 3, wherein a total content of metals derived from a catalyst and a cocatalyst contained in the copolymer is 1000 ppm or less.

### Aspect 5

The copolymer according to any one of aspects 1 to 4, wherein when cured alone, a cured product of the copolymer has a dielectric constant of less than 3.5 and a dielectric tangent of less than 0.001 at a measurement frequency of 40 GHz.

### Aspect 6

The copolymer according to any one of aspects 1 to 5, wherein when cured alone, the cured product of the copolymer has a dielectric constant of less than 2.3 and a dielectric tangent of less than 0.0004 at a measurement frequency of 40 GHz.

### Aspect 7

The copolymer according to any one of aspects 1 to 6, wherein when cured alone, the cured product of the copolymer has a storage modulus of 1 MPa or more as measured at 280°C.

### Aspect 8

The copolymer according to any one of aspects 1 to 7, wherein when cured alone, the cured product of the copolymer has a storage modulus of 5 MPa or more as measured at 280°C.

### Aspect 9

The copolymer according to any one of aspects 1 to 8, satisfying all the following items (1) to (2) and (4) to (6):
(1) a number average molecular weight of the copolymer is 500 or more and 100000 or less;
(2) the α-olefin unit is an α-olefin having 2 to 20 carbon atoms;
(4) the cyclic olefin unit is a unit of a cyclic olefin monomer having 10 or more and 30 or less carbon atoms, and a content thereof is 30 mass% or more and 99 mass% or less;
(5) the aromatic polyene unit is one or more selected from the group consisting of polyenes having 5 or more and 20 or less carbon atoms and having a plurality of vinyl groups and/or vinylene groups in the molecule, and a content of the vinyl groups and/or the vinylene groups derived from the unit of the aromatic polyene monomer is 2 pieces or more and 30 pieces or less per number average molecular weight; and
(6) a total of the α-olefin unit, the cyclic olefin unit, and the aromatic polyene unit is 100 mass%.

### Aspect 10

The copolymer according to aspect 2, satisfying all the following items (1) to (6):
(1) a number average molecular weight of the copolymer is 500 or more and 100000 or less;
(2) the α-olefin unit is an α-olefin having 2 to 20 carbon atoms;
(3) the aromatic vinyl compound unit is an aromatic vinyl compound having 8 or more and 20 or less carbon atoms;
(4) the cyclic olefin unit is a unit of a cyclic olefin monomer having 10 or more and 30 or less carbon atoms, and a content thereof is 30 mass% or more and 99 mass% or less;
(5) the aromatic polyene unit is one or more selected from the group consisting of polyenes having 5 or more and 20 or less carbon atoms and having a plurality of vinyl groups and/or vinylene groups in the molecule, and a content of the vinyl groups and/or the vinylene groups derived from the unit of the aromatic polyene monomer is 2 pieces or more and 30 pieces or less per number average molecular weight; and
(6) a total of the α-olefin unit, the cyclic olefin unit, the aromatic vinyl compound unit, and the aromatic polyene unit is 100 mass%.

### Aspect 11

The copolymer according to any one of aspects 1 to 10, wherein the cyclic olefin unit comprises one or more selected from the group consisting of norbornene, methylphenyl norbornene, substituted norbornenes other than methylphenyl norbornene, and dimethanooctahydro naphthalene.

### Aspect 12

The copolymer according to any one of aspects 1 to 11, having a glass transition temperature in the range of 100°C or more and 350°C or less.

### Aspect 13

The copolymer according to any one of aspects 1 to 12, having a number average molecular weight of 500 or more and less than 30000.

### Aspect 14

A method for producing the copolymer according to any one of aspects 1 to 13, the method comprising copolymerizing monomers of an α-olefin, a cyclic olefin and an aromatic polyene, and an aromatic vinyl compound on an as needed basis, by coordination polymerization using a coordination polymerization catalyst.

### Aspect 15

The method for producing a copolymer according to aspect 14, wherein the coordination polymerization catalyst is a polymerization catalyst comprising a transition metal compound represented by the following general formula (1) and a cocatalyst: 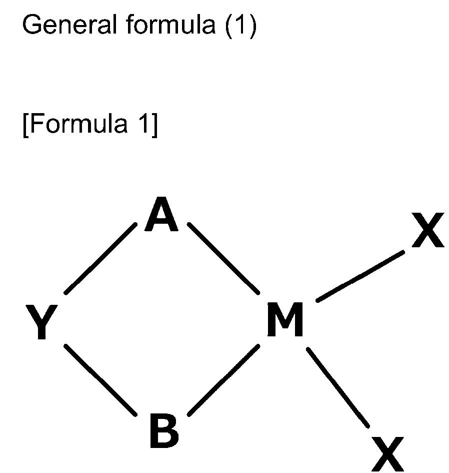
wherein A and B are each independently a group selected from an unsubstituted or substituted cyclopentaphenanthryl group, an unsubstituted or substituted benzoindenyl group, an unsubstituted or substituted cyclopentadienyl group, and an unsubstituted or substituted indenyl group;
Y is a methylene group, silylene group, ethylene group, germylene group or boron residue having bonds to A and B and further having, as a substituent, hydrogen or a hydrocarbon group having 1 to 15 carbon atoms (optionally containing 1 to 3 nitrogen, oxygen, sulfur, phosphorus, or silicon atoms); the substituent is the same as or different from each other; and Y optionally has a cyclic structure;
X is hydrogen, a halogen, an alkyl group having 1 to 15 carbon atoms, an aryl group having 6 to 10 carbon atoms, an alkylaryl group having 8 to 12 carbon atoms, a silyl group having a hydrocarbon substituent having 1 to 4 carbon atoms, an alkoxy group having 1 to 10 carbon atoms, or a dialkylamide group having an alkyl substituent having 1 to 6 carbon atoms; and
M is zirconium, hafnium, or titanium.

### Aspect 16

The method according to aspect 15, wherein A and B in general formula (1) are each independently a group selected from an unsubstituted or substituted cyclopentadienyl group and an unsubstituted or substituted indenyl group.

### Aspect 17

The method according to aspect 15 or 16, wherein a cocatalyst comprising a boron compound is used.

### Aspect 18

The method according to aspect 17, wherein the cocatalyst further comprises an aluminum compound.

### Aspect 19

A cured product comprising the copolymer according to any one of aspects 1 to 13.

### Aspect 20

A cured product of a composition, the composition comprising:
an α-olefin-cyclic olefin-aromatic polyene copolymer satisfying all the following items (1) to (2) and (4) to (6):
   (1) a number average molecular weight of the copolymer is 500 or more and 100000 or less;
   (2) the α-olefin unit is an α-olefin having 2 to 20 carbon atoms;
   (4) the cyclic olefin unit is a unit of a cyclic olefin monomer having 10 or more and 30 or less carbon atoms, and a content thereof is 30 mass% or more and 99 mass% or less;
   (5) the aromatic polyene unit is one or more selected from the group consisting of polyenes having 5 or more and 20 or less carbon atoms and having a plurality of vinyl groups and/or vinylene groups in the molecule, and a content of the vinyl groups and/or the vinylene groups derived from the unit of the aromatic polyene monomer is 2 pieces or more and 30 pieces or less per number average molecular weight; and
   (6) a total of the α-olefin unit, the cyclic olefin unit, and the aromatic polyene unit is 100 mass%; and
one or more additive components selected from the group consisting of a resin component, a curing agent, a monomer, a solvent and a filler;
wherein the cured product has a dielectric constant of 3.5 or less and a dielectric tangent of 0.0015 or less at a measurement frequency of 40 GHz.

### Aspect 21

A cured product of a composition, the composition comprising:
an α-olefin-cyclic olefin-aromatic vinyl compound-aromatic polyene copolymer satisfying all the following items (1) to (6):
   (1) a number average molecular weight of the copolymer is 500 or more and 100000 or less;
   (2) the α-olefin unit is an α-olefin having 2 to 20 carbon atoms;
   (3) the aromatic vinyl compound unit is an aromatic vinyl compound having 8 or more and 20 or less carbon atoms;
   (4) the cyclic olefin unit is a unit of a cyclic olefin monomer having 10 or more and 30 or less carbon atoms, and a content thereof is 30 mass% or more and 99 mass% or less;
   (5) the aromatic polyene unit is one or more selected from the group consisting of polyenes having 5 or more and 20 or less carbon atoms and having a plurality of vinyl groups and/or vinylene groups in the molecule, and a content of the vinyl groups and/or the vinylene groups derived from the unit of the aromatic polyene monomer is 2 pieces or more and 30 pieces or less per number average molecular weight; and
   (6) a total of the α-olefin unit, the cyclic olefin unit, the aromatic vinyl compound unit, and the aromatic polyene unit is 100 mass%; and
one or more additive components selected from the group consisting of a resin component, a curing agent, a monomer, a solvent and a filler;
wherein the cured product has a dielectric constant of 3.5 or less and a dielectric tangent of 0.0015 or less at a measurement frequency of 40 GHz.

### Aspect 22

The cured product according to any one of aspects 19 to 21, further having a storage modulus of 1000 MPa or more as measured at 25°C and a storage modulus of 1 MPa or more as measured at 280°C.

### Aspect 23

The cured product according to any one of aspects 19 to 22, being an electrically insulating material.

### Aspect 24

A CCL substrate, an FCCL substrate, an interlayer insulating material, a coverlay, a high-frequency transmission circuit, or an antenna, comprising the cured product according to aspect 23.

### Aspect 25

A method for producing a cured product, the method comprising the step of polymerizing at least the copolymer according to any one of aspects 1 to 13 using a radical polymerization initiator, wherein the radical polymerization initiator is composed of carbon atoms and hydrogen atoms only, containing no oxygen atoms and no nitrogen atoms in the structure of the radical polymerization initiator.

### ADVANTAGEOUS EFFECT OF INVENTION

The copolymer according to the present invention has excellent low dielectric properties even in an uncured state, exhibits a high elastic modulus at room temperature, and has curability. Furthermore, a cured product of the copolymer has effects of having excellent low dielectric properties, high glass transition temperature, and a high elastic modulus at room temperature and at high temperature. In the case where a copolymer satisfies the properties in an uncured state, a cured product containing the copolymer may also satisfy these properties.

### DETAILED DESCRIPTION OF THE INVENTION

The following provides a more detailed explanation. In the present specification, an α-olefin-cyclic olefin-aromatic polyene copolymer is included in an α-olefin-cyclic olefin-aromatic vinyl compound-aromatic polyene copolymer, and may be collectively referred to by the latter name in some cases. In the present specification, an α-olefin-cyclic olefin-aromatic vinyl compound-aromatic polyene copolymer may be simply referred to as copolymer of the present invention, or simply as copolymer. Unless otherwise specified, the numerical range in the specification includes the upper limit value and the lower limit value of the range. In the specification, the term "sheet" also includes the concept of a film. Further, the term "film" described in the specification has the same meaning as a sheet. In addition, a term "film" in the present specification includes the concept of a sheet. In the present specification, an uncured state is defined as a state in which the gel content of an α-olefin-cyclic olefin-aromatic vinyl compound-aromatic polyene copolymer is 20 mass% or less, more strictly 10 mass% or less, and most strictly 5 mass% or less. The gel content is a value obtained by measurement in accordance with JIS K6796:1998 or ASTM D2765-84, which corresponds to ISO 10147:1994 corresponding to the JIS.

In an embodiment of the present invention, an α-olefin-cyclic olefin-aromatic vinyl compound-aromatic polyene copolymer may be provided. The copolymer in an uncured state may have a dielectric constant of less than 2.4, preferably less than 2.3, and 2.0 or more, and a dielectric tangent of less than 0.0008, preferably less than 0.0004, more preferably less than 0.0003 and 0.0001 or more, at a measurement frequency of 40 GHz. Furthermore, the storage modulus as measured at 25°C is 1000 MPa or more. In the case where the copolymer is cured alone, the cured product may have a dielectric constant of less than 3.5, a dielectric tangent of less than 0.0010, preferably a dielectric constant of 2.0 or more and less than 3.5, and a dielectric tangent of 0.0001 or more and less than 0.0010, more preferably a dielectric constant of less than 2.4 and 2.0 or more, and a dielectric tangent of less than 0.0004, and most preferably a dielectric constant of less than 2.3, and a dielectric tangent of less than 0.0003 and 0.0001 or more, at a measurement frequency of 40 GHz. Furthermore, the storage modulus as measured at 25°C may be 1000 MPa or more. Furthermore, the storage modulus of the cured product as measured at 280°C may be preferably 1 MPa or more, and more preferably 5 MPa or more.

In another embodiment, an aspect in which the dielectric constant or dielectric tangent in an uncured state does not satisfy the conditions, while the dielectric constant, dielectric tangent, and storage modulus of the cured product satisfy the conditions, may be also provided.

### α-Olefin-cyclic olefin-aromatic polyene copolymer

Further, the α-olefin-cyclic olefin-aromatic polyene copolymer of the present invention is a copolymer having monomer units of α-olefin, cyclic olefin, and aromatic polyene each, and the production method thereof is optional. Preferably, the α-olefin-cyclic olefin-aromatic polyene copolymer is a copolymer satisfying all the following (1) to (2) and (4) to (6).
(1) The number average molecular weight of the copolymer is 500 or more and 100000 or less.
(2) The α-olefin unit is an α-olefin having 2 to 20 carbon atoms.
(4) The cyclic olefin unit is a cyclic olefin monomer having 10 or more and 30 or less carbon atoms and optionally having an aromatic ring, and the content thereof is 30 mass% or more and 99 mass% or less.
(5) The aromatic polyene unit is one or more selected from the group consisting of polyenes having 5 or more and 20 or less carbon atoms and having a plurality of vinyl groups and/or vinylene groups in the molecule, and the content of the vinyl groups and/or the vinylene groups derived from the aromatic polyene monomer unit is 2 pieces or more and 30 pieces or less, or 2 pieces or more and less than 30 pieces, per number average molecular weight.
(6) The total of α-olefin units, cyclic olefin units, and aromatic polyene units is 100 mass%.

The α-olefin-cyclic olefin-aromatic polyene copolymer is obtained by copolymerizing monomers of an α-olefin, a cyclic olefin, and an aromatic polyene each.

### α-Olefin-cyclic olefin-aromatic vinyl compound-aromatic polyene copolymer

In an embodiment of the present invention, it is preferable that an aromatic vinyl compound be used to obtain an α-olefin-cyclic olefin-aromatic vinyl compound-aromatic polyene copolymer.

In the present specification, an α-olefin-cyclic olefin-aromatic polyene copolymer is included in an α-olefin-cyclic olefin-aromatic vinyl compound-aromatic polyene copolymer, and may be collectively referred to as the latter name in some cases.

Furthermore, the α-olefin-cyclic olefin-aromatic vinyl compound-aromatic polyene copolymer of the present invention is a copolymer having monomer units of α-olefin (alpha olefin), cyclic olefin, aromatic vinyl compound, and aromatic polyene each, and the production method thereof is optional. Preferably, the α-olefin-cyclic olefin-aromatic vinyl compound-aromatic polyene copolymer is a copolymer satisfying all the following (1) to (6):
(1) The number average molecular weight of the copolymer is 500 or more and 100000 or less;
(2) The α-olefin unit is an α-olefin having 2 to 20 carbon atoms;
(3) The aromatic vinyl compound unit is an aromatic vinyl compound having 8 or more and 20 or less carbon atoms;
(4) The cyclic olefin unit is a cyclic olefin monomer having 10 or more and 30 or less carbon atoms and optionally having an aromatic ring, and the content thereof is 30 mass% or more and 99 mass% or less;
(5) The aromatic polyene unit is one or more selected from the group consisting of polyenes having 5 or more and 20 or less carbon atoms and having a plurality of vinyl groups and/or vinylene groups in the molecule, and the content of the vinyl groups and/or the vinylene groups derived from the aromatic polyene monomer unit is 2 pieces or more and 30 pieces or less, or 2 pieces or more and less than 30 pieces, per number average molecular weight; and
(6) The total of α-olefin units, cyclic olefin units, aromatic vinyl compound unit, and aromatic polyene units each is 100 mass%.

The α-olefin-cyclic olefin-aromatic vinyl compound-aromatic polyene copolymer is obtained by copolymerizing monomers of an α-olefin, a cyclic olefin, an aromatic vinyl compound and an aromatic polyene each.

The α-olefin monomer is an α-olefin having 2 to 20 carbon atoms, and examples thereof include ethylene, propylene, 1-butene, 1-hexene, 1-octene, 1-decene, 1-dodecene, 4-methyl-1-pentene, and 3,5,5-trimethyl-1-hexene. Ethylene is most preferred. In the copolymer, the α-olefin content is optional, preferably 0 mass% or more and 40 mass% or less, more preferably more than 0 mass% and 30 mass% or less, still more preferably 1 mass% or more and 30 mass% or less, and most preferably 5 mass% or more and 30 mass% or less. With an α-olefin monomer unit content of 40 mass% or less, the content of cyclic olefin units is relatively high, so that the glass transition temperature of the copolymer may be within a preferred range. The higher the α-olefin monomer unit content (for example, 5 mass% or more), the less brittle the copolymer and the cured product thereof are.

In the present specification, the term "cyclic olefin monomer" refers to a cyclic olefin having 7 or more and 30 or less carbon atoms (preferably 10 or more and 30 or less carbon atoms). Examples of the cyclic olefins having 7 or more and 30 or less carbon atoms include cyclic olefins having one or a plurality of alicyclic structures in the molecule and having a polymerizable vinyl group, a vinylene group, or a vinylidene group. Preferred examples of the cyclic olefins include cyclic olefins having a hydrocarbon ring structure without heteroatoms, and cyclic olefins having an unsaturated hydrocarbon ring are more preferred. Such cyclic olefins have notable characteristics, including easy preparation from inexpensive raw materials and by simple processes compared to conventional engineering plastics, despite having low dielectric properties and high glass transition temperature. Examples of the cyclic olefins include norbornenes. Norbornenes are monomers selected from norbornene and substituted norbornene. Norbornene may be synthesized, for example, by the Diels-Alder reaction of ethylene and cyclopentadiene. The substituted norbornene is a substituted norbornene having a polymerizable vinyl group, vinylene group, or vinylidene group in the molecule, and examples thereof include dimethano octahydro naphthalene (DMON) and trimethano dodecahydro anthracene (TMDA). These are also Diels-Alder reaction products of norbornenes and cyclopentadiene. These substituted norbornenes are specifically described in, for example, International Publication No. WO 2006/118261. In the present invention, more preferred cyclic olefins are cyclic olefins having a larger number of ring structures and a higher molecular weight, which may include, for example, dimethano octahydro naphthalene (DMON) and trimethano dodecahydro anthracene (TMDA). Copolymerization of such cyclic olefins allows to obtain a copolymer having a higher glass transition temperature (Tg) with a smaller mol% content of monomer units. Therefore, the mol% content of other monomer units may be increased while maintaining the high glass transition temperature of the copolymer. Increasing the mole% content of aromatic vinyl compound monomer units as other monomer units enhances the aromaticity of the copolymer as a whole, which is preferable because the compatibility of the copolymer with other raw materials and resins may be enhanced. These high molecular weight cyclic olefins may be used alone, or may be used as a mixture with norbornene, etc. to be copolymerized. In particular, the DMON and TMDA described above may be obtained as a mixture with norbornene when produced by the Diels-Alder reaction in some cases, and using the mixture directly for polymerization allows production cost to be reduced. In the present invention, more preferred cyclic olefins are norbornenes having aromatic substituents, and examples thereof include phenyl norbornene(5-phenylbicyclo[2.2.1]hept-2-ene) as a Diels-Alder reaction product of cyclopentadiene and styrene, indanyl norbornene(1,4-methano-1,9a,4,4a-tetrahydrofluorene) as a Diels-Alder reaction product of cyclopentadiene and indene, and methylphenyl norbornene (MPNB, 5-methyl-5-phenylbicyclo[2.2.1]hept-2-ene) as a Diels-Alder reaction product of cyclopentadiene and α-methylstyrene. When copolymerized, norbornenes having such aromatic substituents may impart a higher glass transition temperature (Tg) to the copolymer, and furthermore, due to having aromaticity, may exhibit high compatibility with other aromatic raw materials (crosslinkable soft resins and flame retardants). Furthermore, methylphenyl norbornene(5-methyl-5-phenylbicyclo[2.2.1]hept-2-ene) is preferably used to improve the thermal oxidation resistance of the resulting copolymer, as described in Japanese Patent Laid-Open No. 2005-239975. Norbornenes having these aromatic substituents are also specifically described in, for example, Japanese Translation of PCT International Application Publication No. 11-504669 and Japanese Patent Laid-Open No. 2005-239975. The optimal content of the cyclic olefin unit contained in the copolymer varies depending on the type of cyclic olefin, and is, for example, 50 mass% or more and 99 mass% or less, preferably 50 mass% or more and 95 mass% or less, more preferably 70 mass% or more and 95 mass% or less, and most preferably 80 mass% or more and 95 mass% or less. The optimal content of the cyclic olefin unit contained in the copolymer may be less than 90 mass% from the viewpoint of imparting a certain degree of toughness to the copolymer. The content within the ranges allows a preferred high glass transition temperature of the copolymer to be easily achieved. The preferred glass transition temperature of the copolymer is 100°C or more and 350°C or less, more preferably 130°C or more and 300°C or less, and most preferably 180°C or more and 300°C or less. Those skilled in the art may appropriately adjust the type and content of the cyclic olefin used to achieve the preferred glass transition temperature.

In a preferred embodiment, the cyclic olefin units contained in the copolymer may include one or more selected from the group consisting of norbornene, methylphenyl norbornene, substituted norbornenes other than methylphenyl norbornene and dimethano octahydro naphthalene, and more preferably, may include one or more selected from the group consisting of norbornene, methylphenyl norbornene and dimethano octahydro naphthalene.

The aromatic vinyl compound monomer is an aromatic vinyl compound having 8 to 20 carbon atoms, and examples thereof include styrene, paramethyl styrene, ethylvinylbenzene, para-isobutyl styrene, various vinyl naphthalenes, and various vinylanthracenes. The aromatic vinyl compound may be contained in the copolymer as a result of copolymerization of the components contained as impurities in the aromatic polyene used in polymerization. The content of aromatic vinyl compound monomer units contained in the copolymer is optional, and preferably 0 mass% or more and 40 mass% or less, more preferably 0 mass% or more and 30 mass% or less, still more preferably 0 mass% or more and 20 mass% or less, further preferably 0 mass% or more and 10 mass% or less, and furthermore preferably 0 mass%. The content of aromatic vinyl compound monomer units contained in the copolymer may be more than 0 mass%. The content of aromatic vinyl compound monomer units contained in the copolymer may be 30 mass% or less, may be less than 30 mass%, may be 10 mass% or less, may be less than 10 mass%, may be 1 mass% or less, may be less than 1 mass%, or may be less than 0.5 mass%.

With a content of aromatic vinyl compound monomer units of 40 mass% or less, the content of cyclic olefin units is relatively high, so that the glass transition temperature of the copolymer may be increased. On the other hand, with a content of aromatic vinyl compound monomer units of 10 mass% or more, preferably 30 mass% or more, the aromaticity of the copolymer may be improved, especially in the case where the cyclic olefin of the copolymer of the present invention has no aromatic substituent. Accordingly, good compatibility with other resin materials, flame retardants and fillers may be achieved, so that bleeding out of flame retardants may be suppressed and fillers may be highly filled easily, which are preferred. As described above, the glass transition temperature and aromaticity of the copolymer may be adjusted by the aromatic vinyl compound content of the copolymer.

The aromatic polyene monomer is a polyene having 5 or more and 20 or less carbon atoms, preferably 8 or more and 20 or less carbon atoms, and having a plurality of vinyl groups and/or vinylene groups in the molecule. The aromatic polyene monomer is preferably a polyene having 8 or more and 20 or less carbon atoms and having a plurality of vinyl groups in the molecule, being more preferably various (ortho-, meta-, and para-) divinylbenzenes or a mixture thereof, and a compound composed of carbon and hydrogen, substantially containing no oxygen, nitrogen, or halogen, having an aromatic vinyl structure such as divinylnaphthalene, divinylanthracene, p-2-propenylstyrene, and p-3-butenylstyrene. Alternatively, a bifunctional aromatic vinyl compound described in Japanese Patent Laid-Open No. 2004-087639, for example, 1,2-bis(vinylphenyl)ethane (abbreviation: BVPE) may be used. Among these, various (ortho, meta and para) divinylbenzenes, or mixtures thereof are preferably used, and a mixture of meta and paradivinylbenzene is most preferably used. In the specification, these are referred to as divinylbenzenes. In the case where divinylbenzenes are used as aromatic polyenes, the vinyl group contained in the divinylbenzene unit are preferred due to having high crosslinking efficiency during curing treatment, which results in easy curing.

The number average molecular weight of the copolymer is preferably 500 or more and 100000 or less, more preferably 500 or more and 30000 or less, or 500 or more and less than 30000, still more preferably 500 or more and 15000 or less, or 500 or more and less than 15000, and furthermore preferably 500 or more and 12000 or less, or 500 or more and less than 12000. With a number average molecular weight of 500 or more, the composition in the uncured stage has high mechanical properties with moderate stickiness, so that easy moldability of the copolymer as thermoplastic resin may be achieved. With a number average molecular weight of 30000 or less, the moldability is improved. In particular, a number average molecular weight of 30000 or less, or 12000 or less, is convenient, because the viscosity of a varnish containing the copolymer may be kept below a certain value. With a viscosity of the varnish of lower than a certain value, the workability is improved, and glass fibers or the like are easily impregnated with the varnish, so that embeddability into semiconductor devices having an uneven surface may be improved.

In the copolymer, the content of the vinyl groups and/or the vinylene groups derived from an aromatic polyene unit is 2 pieces or more and 30 pieces or less, preferably 3 pieces or more and 20 pieces or less, per number average molecular weight. The content of the vinyl groups and/or the vinylene groups derived from an aromatic polyene unit may be less than 30 pieces, preferably less than 20 pieces, per number average molecular weight. The content of the vinyl groups and/or the vinylene groups may be collectively referred to as "vinyl group content" in the following. Since vinyl groups are superior to vinylene groups in terms of crosslinking efficiency, the content of vinyl groups (not including vinylene groups in the case) derived from aromatic polyene units is 2 pieces or more and 30 pieces or less, preferably 3 pieces or more and 20 pieces or less, per number average molecular weight in the present invention. With a vinyl group content of 2 pieces or more, the crosslinking efficiency is high, so that a cured product with sufficient crosslinking density may be obtained. With increase in the vinyl group content, it becomes easy to improve the mechanical properties of the finally resulting cured product at normal temperature and high temperature. The content of the vinyl group derived from the aromatic polyene unit (divinylbenzene unit) per number average molecular weight in the copolymer may be obtained by comparing the number average molecular weight (Mn) in terms of standard polystyrene obtained by GPC (gel permeation chromatography) method known to those skilled in the art with the composition and the content of vinyl groups derived from the aromatic polyene unit obtained by ¹H-NMR measurement and/or ¹³C-NMR measurement in quantitative mode. Such a method is obvious to those skilled in the art and known to the public. The content may also be obtained by a method described in the patent literature of the prior art of the present specification. The content of aromatic polyene monomer units in the copolymer is optional, preferably less than 40 mass%, more preferably less than 30 mass%. With such a content, the number of crosslinking groups is appropriately suppressed, and the effect of improving the stability during production of the copolymer and the stability during curing is obtained.

In the copolymers, specific examples of suitable α-olefin-cyclic olefin-aromatic vinyl compound-aromatic polyene copolymers include one or more selected from the group consisting of propylene-norbornene-styrene-divinylbenzene copolymer, 1-hexene-norbornene-styrene-divinylbenzene copolymer, 1-octene-norbornene-styrene-divinylbenzene copolymer, ethylene-norbornene-ethylvinylbenzene-divinylbenzene copolymer, propylene-styrene-norbornene-divinylbenzene copolymer, 1-hexenestyrene-styrene-norbornene-divinylbenzene copolymer, and 1-octene-norbornene-styrene-divinylbenzene copolymer. In addition, copolymers in which the norbornene is replaced with dimethano octahydro naphthalene (DMON), trimethano dodecahydro anthracene (TMDA), phenyl norbornene (5-phenylbicyclo[2.2.1]hept-2-ene), or methylphenyl norbornene (5-methyl-5-phenylbicyclo[2.2.1]hept-2-ene) are also suitable examples of copolymers of the present invention.

In an embodiment of the α-olefin-cyclic olefin-aromatic polyene copolymer or α-olefin-cyclic olefin-aromatic vinyl compound-aromatic polyene copolymer, an aspect in which the content of α-olefin monomer units is 0 mass% (i.e., no α-olefin monomer unit is included) may also be provided. In the present specification, such a copolymer is also referred to as a "cyclic olefin-aromatic polyene copolymer" or a "cyclic olefin-aromatic vinyl compound-aromatic polyene copolymer". The copolymer according to the embodiment is described below. Here, the type of monomers each of the cyclic olefin, aromatic vinyl compound and aromatic polyene, and the content of monomer units each in the copolymer are as described above.

The cyclic olefin-aromatic polyene copolymer or cyclic olefin-aromatic vinyl compound-aromatic polyene copolymer may be produced by the production method described in the present specification. Specifically, it may be produced from the monomers each of a cyclic olefin, an aromatic vinyl compound and an aromatic polyene, using a coordination polymerization catalyst including a transition metal compound and a cocatalyst. The chemical structure of the copolymer obtained using the coordination polymerization catalyst including a combination of a transition metal compound and a cocatalyst is characterized by not containing a specific structure. In other words, while conventional copolymers obtained by cationic polymerization methods according to the prior art have a characteristic polymer end structure as described in, for example, International Publication No. WO 2018/181842, the copolymer according to an embodiment of the present invention has no such structure, which is a notable difference. Due to the difference, the present invention has an effect of facilitating molecular design.

The polymer end structure contained in the cyclic olefin-aromatic polyene copolymer or the cyclic olefin-aromatic vinyl compound-aromatic polyene copolymer may be qualitatively or quantitatively elucidated by a known method using ¹H-NMR or ¹³C-NMR. The polymer end structure contained in the cyclic olefin-aromatic vinyl compound-aromatic polyene copolymer as a typical example of the copolymer including norbornene, DMON or MPNB as the cyclic olefin, styrene or ethylvinylbenzene as the aromatic vinyl compound, and divinylbenzene as the aromatic polyene is substantially one of the structures represented by the following E-1 to E-8 below, or any combination thereof. In the case of cyclic olefins other than the above, aromatic vinyl compounds other than the above, and aromatic polyenes other than divinylbenzene, these structural formulas may be understood by replacement with structures corresponding thereto. "Substantially" indicates that 90 mol% or more, preferably 95 mol% or more, and most preferably 99 mol% or more of the total end structures of the copolymer include one of the structures represented by the following E-1 to E-8, or an optional combination thereof.

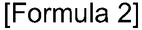

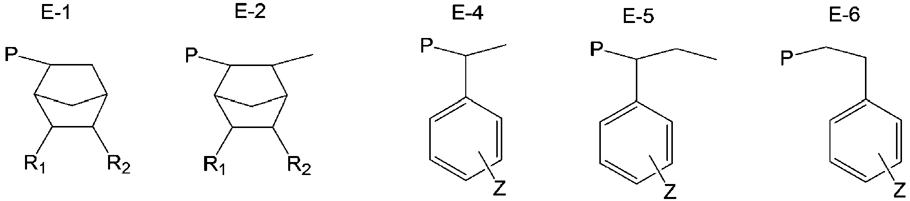

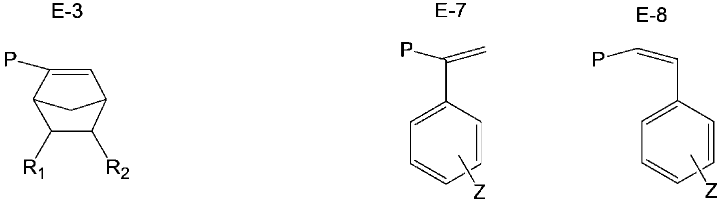

In the formulae, P represents a polymer structure residue of norbornene (or DMNO, or MPNB)-styrene (or ethylvinylbenzene)-divinylbenzene copolymer. Z represents hydrogen, an ethyl group, or a vinyl group.

In the case where the cyclic olefin is DMON or MPNB, the structure including the substituents R₁ and R₂ is as shown below.

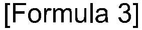

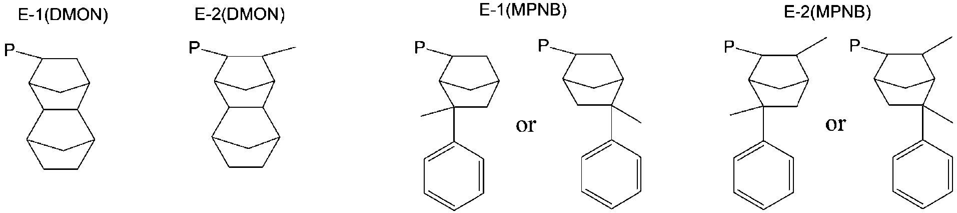

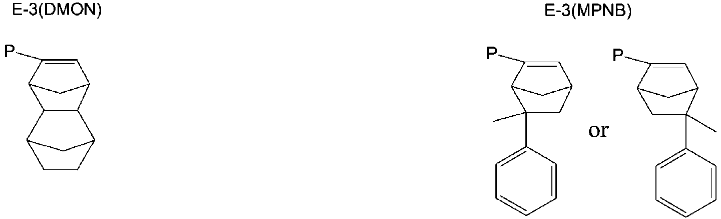

The polymerization initiation ends, which account for approximately half of the polymer end structures, are generally E-1, E-2, E-4, and E-5 described above. The structures are ends with saturated structures, and therefore aromatic vinyl compound-aromatic polyene copolymers are essentially characterized by high durability including heat resistance. The proportion of the polymerization initiation end structures varies depending on various factors, such as whether the first monomer insertion into a metal-hydrogen bond occurs, whether the first monomer insertion into a metal-alkyl group structure occurs, whether the first monomer insertion occurs by any one of a cyclic olefin, styrene and divinylbenzene, and whether the first monomer is 2,1-insertion or 1,2-insertion in the case where the first monomer is styrene or divinylbenzene.

Furthermore, among the polymer end structures, the structures of the chain transfer ends of the polymer growing chain (also called as polymerization termination ends) are generally E-1, E-6, and E-8 in large numbers, with E-3, E-4, and E-7 also included. The proportion of the chain transfer end structures varies depending on whether the chain transfer occurs by hydrogen abstraction at the beta position, by chain transfer to another coordination monomer, by chain transfer to an alkyl aluminum as cocatalyst component, or by chain transfer to a chain transfer agent such as hydrogen. In general, cyclic olefins have a rigid structure, so that E-3 structures resulting from hydrogen abstraction at the beta position are few.

The polymer end structure of cyclic olefin-aromatic polyene copolymer or cyclic olefin-aromatic vinyl compound-aromatic polyene copolymer includes at least one or more of the structures E-1 to E-8, substantially without containing other structures. The aromatic vinyl compound-aromatic polyene copolymer which may contain an olefin according to the present invention is obtained by a specific coordination polymerization, so that the copolymer has high linearity with a relatively low degree of polymer chain branching, and the proportion of polymer end structures contained is also relatively small.

An example of the polymer obtained by cationic polymerization according to the conventional art is described as follows in comparison with the present invention. The aromatic-based monomer of carbon cation at the polymer growth end described in International Publication No. WO 2018/181842, or a characteristic end structure formed by chain transfer such as electrophilic substitution reaction to an aromatic ring contained in the polymer itself (structures represented as t1 and t2 in International Publication No. WO 2018/181842) according to the conventional art is not included in the copolymer according to the present invention. On the other hand, the aromatic vinyl compound-aromatic polyene copolymer according to the conventional art described in International Publication No. WO 2018/181842 contains a very large number of end structures per polymer molecule due to the dendritic, multi-branched structure, and the end structures described therein are mostly unsaturated structures of vinyl groups and vinylene groups with various structures resulting from cationic polymerization, which causes problems with heat resistance stability. In particular, the vinylene groups contained in a relatively large amount remain in the cured product even after the curing reaction so as to deteriorate the heat resistance stability after curing. The problem has not been resolved. In other words, many unsaturated groups such as vinylene groups present in the cured product bond to or react with oxygen in the air, resulting in an undesirable increase in the dielectric constant and dielectric tangent of the cured product.

Furthermore, Japanese Patent Laid-Open No. 2018-039995 also describes a cyclic olefin-aromatic vinyl compound-aromatic polyene copolymer according to the conventional art, which is obtained by a similar cationic polymerization. Although the patent literature includes no description on an end structure, the same production method as in International Publication No. WO 2018/181842 is adopted, and the majority of the resulting polymers is composed of aromatic polyene and aromatic vinyl compound units, with a high content of aromatic polyene (divinylbenzene) units and the similarly large molecular weight distribution (Mw/Mn). Accordingly, the copolymer is presumed to have an end structure similar to that described in International Publication No. WO 2018/181842 and a dendritic multi-branched structure. Since a part of the end structures has a cyclic olefin structure, the proportion of unsaturated groups at the end may be reduced. It is presumed that the increase rates of the dielectric constant and dielectric tangent after heat resistance test are also reduced or insufficient compared to the case where no cyclic olefin is contained. In contrast to the dendritic structure with many end groups according to such conventional techniques, the copolymer of the present invention has a relatively linear structure with a small number of end structures in a copolymer molecule, without cyclic olefins unevenly distributed at the copolymer ends, so that the number of cyclic olefin ends contained in one copolymer molecule may be generally less than 1.5 pieces.

The α-olefin-cyclic olefin-aromatic vinyl compound-aromatic polyene copolymer of the present invention may be sufficiently cured when cured alone. Here, curing alone means adding a curing agent (peroxide or another radical polymerization initiator) in an amount of 1 part by mass or less to 100 parts by mass of the copolymer, and performing a curing treatment under appropriate curing conditions for the peroxide used. The degree of curing may be evaluated by the gel content, which is higher than 50%, preferably 90% or more, and particularly preferably 95% or more. The cured product exhibits excellent low dielectric properties and has a high glass transition temperature, and a cured material having a high elastic modulus at room temperature and high temperatures can be obtained. Specifically, the dielectric constant of the cured product is 3.5 or less, preferably 2.0 or more and 3.5 or less, more preferably 2.0 or more and less than 3.5, and still more preferably 2.0 or more and less than 2.5. The dielectric tangent of the cured product is less than 0.001, preferably 0.0002 or more and less than 0.001, and may be substantially 0.0005 or more and less than 0.001. The glass transition temperature is optional, and may be 100°C or more and 350°C or less, preferably 130°C or more and 300°C or less. The storage modulus as measured at 25°C may be 1000 MPa or more, and the storage modulus as measured at 280°C may be 1 MPa or more, more preferably 5 MPa or more. Here, the gel content is a value obtained in accordance with JIS K6796:1998 described above (or ASTM D2765-84 corresponding to ISO10147:1994 corresponding to the JIS), and the dielectric constant and dielectric tangent are values obtained at 25°C and 40 GHz. The glass transition temperature and the storage modulus at each temperature are obtained by dynamic mechanical analysis (DMA) at a measurement frequency of 1 Hz. Accordingly, a cured product with a sufficiently high gel content may be obtained by curing a composition containing the copolymer, and the cured product may exhibit excellent low dielectric properties, a high glass transition temperature, and a high storage modulus at room temperature and at high temperatures.

### Composition containing copolymer of present invention

Although the copolymer of the present invention may be cured alone, the copolymer of the present invention may be combined with other materials to form a composition, which may be cured. Here, the other materials include the following "resin component", "curing agent", "monomer", "other olefin-aromatic vinyl compound-aromatic polyene copolymers not containing a cyclic olefin", "solvent", "filler", and "other additives".

### Resin composition

Although any resin component may be used as long as the effects of the present invention is not impaired, it is preferable that one or more selected from a hydrocarbon-based elastomer, a polyether-based resin, an aromatic polyene-based resin, and an olefin not containing a cyclic olefin-aromatic vinyl compound-aromatic polyene copolymer be used. Of these, a hydrocarbon-based elastomer and an olefin not containing a cyclic olefin-aromatic vinyl compound-aromatic polyene copolymer are more preferred. Of the hydrocarbon-based elastomers, a conjugated diene polymer is preferred. Of the conjugated diene polymers, 1,2-polybutadiene is preferred. The amount of the resin component may be in the range of preferably 1 to 500 parts by mass in total, more preferably 1 to 300 parts by mass in total, relative to 100 parts by mass of the copolymer of the present invention.

### Hydrocarbon-based elastomers

The hydrocarbon-based elastomer that may be suitably used in the composition of the present invention may have a number average molecular weight of 20000 or more, preferably 30000 or more. Examples of the hydrocarbon-based elastomer include ethylene-based and propylene-based elastomers, and one or a plurality of elastomers selected from conjugated diene-based polymers, aromatic vinyl compounds-conjugated diene-based block copolymers or random copolymers, and hydrides (hydrogenated product) thereof. Examples of the ethylene-based elastomer include an ethylene-α-olefin copolymer such as an ethylene-octene copolymer and ethylene-1-hexene copolymer, EPR and EPDM. Examples of the propylene-based elastomer include an atactic polypropylene, a polypropylene having low stereoregularity, and a propylene-α-olefin copolymer such as propylene-1-butene copolymer. The hydrocarbon elastomers described above may be modified by introducing functional groups from maleic anhydride or other compounds.

### Conjugated diene-based polymer

Examples of the conjugated diene polymer include polybutadiene and 1,2-polybutadiene. Examples of the aromatic vinyl compound-conjugated diene-based block copolymer or random copolymer, and a hydride (hydrogenated product) thereof include SBS, SIS, SEBS, SEPS, SEEPS, and SEEBS. The 1,2-polybutadiene that may be preferably used may be obtained, for example, as a product of JSR Corporation, or may be obtained as a liquid polybutadiene from Nippon Soda Co., Ltd., under product name of B-1000, B-2000 or B-3000. Examples of the copolymers containing a 1,2-polybutadiene structure that may be suitably used include "Ricon 100" manufactured by TOTAL Cray Valley. The conjugated diene polymers described above and the hydrides thereof may be modified, for example, by introducing functional groups from maleic anhydride or other compounds. Among the conjugated diene polymers, conjugated diene copolymers are preferred. Among these conjugated diene copolymers, hydrides of block copolymers such as SEBS, SEPS, SEEPS, and SEEBS are useful as compatibilizers between the copolymer of the present invention and other <resin components>. These are available from Asahi Kasei Corporation under the trade names TUFTEC or SOE-SS, from Kuraray Co., Ltd. under the trade name SEPTON, and from Kraton Corporation under the trade name Kraton.

### Polyether-based resin

Examples of the polyether-based resins include polyphenylene ether and polyether. As polyphenylene ether having a functional group, it is preferable that the molecular end be modified with a functional group. Further, in the case of addition for the purpose of curing the composition of the present invention, it is preferable that a plurality of functional groups be included in one molecule. For example, it is preferable to make a modified polyphenylene ether. Examples of the functional groups include radically polymerizable functional groups and functional groups such as epoxy group, and radically polymerizable functional groups are preferred. As radically polymerizable functional groups, vinyl groups are preferred. As vinyl groups, one or more in the group consisting of an allyl group, (meth)acryloyl group, and aromatic vinyl group are preferred, one or more in the group consisting of a (meth)acryloyl group and aromatic vinyl group are more preferred, and an aromatic vinyl group is most preferred. That is, in the composition of the present invention, a bifunctional polyphenylene ether having a molecular chain modified with radically polymerizable functional groups at both ends is particularly preferred. Examples of such a polyphenylene ether include Noryl (trademark) SA9000 manufactured by SABIC (a modified polyphenylene ether having a methacryloyl group at both ends, number average molecular weight: 2200), and a bifunctional polyphenylene ether oligomer manufactured by MITSUBISHI GAS CHEMICAL COMPANY, INC. (OPE-2St, a modified polyphenylene ether having a vinylbenzene group at both ends, number average molecular weight: 1200). In addition, an allylated PPE manufactured by Asahi Kasei Corporation and an aromatic polyether (ELPAC HC-F series) manufactured by JSR Corporation may also be used. Of these, a bifunctional polyphenylene ether oligomer (OPE-2St) manufactured by MITSUBISHI GAS CHEMICAL COMPANY, INC. and an aromatic polyether (ELPAC HC-F series) manufactured by JSR Corporation may be preferably used.

### Aromatic polyene resin

The aromatic polyene resin includes a divinylbenzene-based reactive multi-branched copolymer (PDV or ODV) manufactured by NIPPON STEEL Chemical & Material Co., Ltd. Such a copolymer is described, for example, in literature "Synthesis of multi-functional aromatic vinyl copolymer and development of new IPN-type low loss dielectric material made from the same" (Masanao Kawabe et. al., Journal of Electronics Packaging Society, p. 125, Vol. 12, No. 2 (2009)).

### Another olefin-aromatic vinyl compound-aromatic polyene copolymer not containing cyclic olefin

Another olefin-aromatic vinyl compound-aromatic polyene copolymer not containing a cyclic olefin that may be used in the present invention is an olefin-aromatic vinyl compound-aromatic polyene copolymer satisfying all the following (A) to (E).
(A) The number average molecular weight of the copolymer is 500 or more and 100000 or less.
(B) The olefin monomer unit is one or more selected from α-olefins having 2 or more and 20 or less carbon atoms, and the olefin contain no cyclic olefin.
(C) The aromatic vinyl compound monomer unit is an aromatic vinyl compound having 8 or more and 20 or less carbon atoms, and the content of the aromatic vinyl compound monomer unit is 0 or more and 90 mass% or less.
(D) The aromatic polyene monomer unit is one or more selected from polyenes having 5 or more and 20 or less carbon atoms and having a plurality of vinyl groups and/or vinylene groups in the molecule, and the content of the vinyl groups and/or the vinylene groups derived from the aromatic polyene unit is 2 pieces or more and 30 pieces or less per number average molecular weight. The content of the vinyl groups and/or the vinylene groups derived from the aromatic polyene unit per number average molecular weight may be 2 pieces or more and less than 30 pieces per number average molecular weight.
(E) The total of the olefin monomer units, the aromatic vinyl compound monomer units, and the aromatic polyene monomer units is 100 mass %.

Details of each of the monomers of α-olefin, aromatic vinyl compound, and aromatic polyene are as described above. Such copolymers are specifically described in Japanese Patent Laid-Open No. 2009-161743, International Publication No. WO 2021/112087, International Publication No. WO 2021/112088, and International Publication No. WO 2022/014599. However, as described above, such other copolymers contain no cyclic olefin. Among the olefin-aromatic vinyl compound-aromatic polyene copolymers not containing a cyclic olefin, copolymers with an aromatic vinyl compound monomer content of 0 mass% or more and 60 mass% or less, in particular, are soft. Accordingly, by blending the copolymer with the copolymer of the present invention, the toughness of the resulting cured product can be improved with cracking suppressed, which is preferred.

### Curing agents

As the curing agent that may be contained in the composition, a known curing agent that may be conventionally used for polymerization or curing of aromatic polyenes and aromatic vinyl compounds may be used. Examples of such a curing agent include a radical polymerization initiator, a cationic polymerization initiator, and an anionic polymerization initiator, and a radical polymerization initiator may be preferably used. Preferably, the curing agent is an organic peroxide-based (peroxide) or azo-based polymerization initiator, which may be freely selected depending on the application and conditions. A catalog listing organic peroxides may be downloaded from the NOF CORPORATION website, for example:
https://www.nof.co.jp/product-search/family/1020001

The organic peroxide is also described in the catalogs of FUJIFILM Wako Pure Chemical Corporation and Tokyo Chemical Industry Co., Ltd. The curing agent used in the present invention may be obtained from these companies. Further, a hydrocarbon-based radical polymerization initiator containing no oxygen atoms and no nitrogen atoms in the structure, or composed only of carbon atoms and hydrogen atoms, such as 2,3-dimethyl-2,3-diphenylbutane, may also be suitably used. By using such a hydrocarbon-based radical polymerization initiator to produce a cured product, a cured product containing no oxygen atoms and no nitrogen atoms and having a lower dielectric constant and lower dielectric loss tangent may be obtained. Accordingly, an effect to further improve the low dielectric properties of the cured product may be obtained. Further, a known photopolymerization initiator using light, ultraviolet rays, or radiation may also be used as the curing agent. Examples of the curing agent using the photopolymerization initiator include a photo radical polymerization initiator, a photo cationic polymerization initiator, and a photo anionic polymerization initiator. Such a photopolymerization initiator may be obtained from, for example, Tokyo Chemical Industry Co., Ltd. Furthermore, curing may be performed by radiation or electron beam itself. Alternatively, cross-linking and curing may be performed by thermal polymerization of the raw materials contained without a curing agent.

The amount of the curing agent used is not particularly limited, and in general preferably 0.01 to 10 parts by mass in outer percentage relative to 100 parts by mass of the composition (it is preferable that a curing agent and a solvent are removed). In the case where a curing agent such as peroxide-based (peroxide) or azo-based polymerization initiator is used, the curing treatment is performed at an appropriate temperature and time in consideration of the half-life thereof. The conditions in this case are optional according to the curing agent, and in general, a temperature range of about 50°C to 180°C is suitable.

### Monomers

The amount of monomers that the composition of the present invention may contain is optional, preferably 300 parts by mass or less relative to 100 parts by mass of the copolymer. Incidentally, the composition may contain substantially no monomers. In the case where a monomer is contained, a content of 1 part by mass or more is preferred, and 5 parts by mass or more is more preferred. With an amount of monomers of 30 parts by mass or less, in particular, the uncured composition hardly has viscous property, so that easy moldability as a thermoplastic resin is achieved. Further, with a content of easily volatile monomers below a certain level, the odor at the uncured stage causes no problem. In the case where a solvent is added to a composition to take a product form in varnish form, there is a problem that monomers are lost as the solvent evaporates during use, so that substantial monomer content tends to decrease. Further, in the case where the product form is an uncured sheet, with a certain amount or less of monomers contained, change in the monomer content during storage hardly occurs. The monomer that may be suitably used in the composition of the present invention has a molecular weight of preferably less than 1000, more preferably less than 500. Monomers that may be suitably used in the composition of the present invention are the aromatic vinyl compound monomers described above, the aromatic polyene monomers described above, and/or the following polar monomers. As the monomers, monomers that may be polymerized with a radical polymerization initiator are preferred, and one or more selected from the group consisting of aromatic vinyl compounds and aromatic polyenes are more preferred. Further, BVPE (1,2-bis(vinylphenyl)ethane) described in Japanese Patent Laid-Open No. 2003-212941 may also be preferably used.

### Aromatic vinylene monomer

The aromatic vinylene monomer that may be included in the present invention refers to a compound having both of a single aromatic ring or multiple condensed aromatic rings having 9 to 30 carbon atoms and a vinylene group. Examples of such aromatic vinylene compounds include indenes, beta-substituted styrenes, and acenaphthylenes. Examples of indenes include indene, various alkyl-substituted indenes, and phenyl-substituted indenes. Examples of beta-substituted styrenes include beta-alkyl-substituted styrenes such as beta-methylstyrene, and phenyl-substituted styrenes. Examples of acenaphthylenes include acenaphthylene, various alkyl-substituted acenaphthylenes, and various phenyl-substituted acenaphthylenes. As aromatic vinylene compound, the exemplified compounds may be used alone or in combination of two or more. From the viewpoints of industrial availability and radical polymerizability, acenaphthylene is the most preferred aromatic vinylene compound.

### Polar monomer

A relatively small amount of polar monomer may be used for the purpose of imparting adhesiveness to other materials required as an insulating material. Examples of the above-mentioned polar monomer include various maleimides, bismaleimides, maleic anhydride, glycidyl (meth)acrylate, triallyl isocyanurate, tri(meth)acrylic isocyanurate, and trimethylolpropane tri(meth)acrylate. Maleimides and bismaleimides that may be used in the present invention are described in, for example, International Publication No. WO 2016/114287, and may be purchased from, for example, Daiwa Kasei Industry Co., Ltd. Alternatively, these maleimide group-containing compounds may be used as polyamino bismaleimide compounds, from the viewpoints of solubility in an organic solvent, high frequency properties, high adhesiveness to a conductor, moldability of a prepreg, etc. The polyaminobismaleimide compound is obtained, for example, from a Michael addition reaction of a compound having two maleimide groups at a terminal and an aromatic diamine compound having two primary amino groups in a molecule. For obtaining high cross-linking efficiency with a small amount of addition, it is preferable to use a polar monomer having a polyfunctional group containing two or more functional groups, and examples thereof include bismaleimides, triallyl isocyanurate (TAIC), and trimethylolpropane tri(meth)acrylate. The amount of the polar monomer that may be contained in the composition is in the range of 0.1 to 30 parts by mass, preferably 0.1 to 10 parts by mass, relative to 100 parts by mass of the copolymer. By using 30 parts by mass or less, the dielectric constant and dielectric tangent of the resulting cured product is reduced. For example, in a preferred embodiment, the dielectric constant of the copolymer may be suppressed to 3.5 or less, and the dielectric tangent may be suppressed to 1.2×10⁻³ or less.

### Solvent

An appropriate solvent may be added to the composition of the present invention on an as needed basis. The solvent is used to adjust the viscosity and fluidity of the composition. The solvent is preferably volatile, and, for example, cyclohexane, toluene, ethylbenzene, acetone or isopropanol is used. The solvent is used to adjust the viscosity and fluidity of the composition as a varnish. As the solvent, a solvent having a boiling point of a certain level or more is preferred, because an applied film having a uniform thickness is obtained with a solvent having a high boiling point under atmospheric pressure, that is, having a low volatility. The preferred boiling point is 100°C or more, more preferably 130°C or more and 300°C or less, under atmospheric pressure. Examples of the solvent suitably used for a varnish include cyclohexane, toluene, xylene, mesitylene, tetralin, acetone, ethylbenzene, limonene, a mixed alkane, a mixed aromatic-based solvent, ethylene glycol methyl ether acetate, ethylene glycol monoethyl ether acetate, and ethylene glycol monobutyl ether. The amount of solvent used, in particular, is in the range of preferably 10 to 2000 parts by mass, more preferably 5 to 500 parts by mass, and still more preferably 10 to 300 parts by mass, relative to 100 parts by mass of the composition of the present invention. It is preferable that the solvent be removed by drying or the like before curing of the present composition.

### Filler

An inorganic filler or organic filler may be added on an as needed basis. These fillers are added for the purpose of, for example, controlling the coefficient of thermal expansion, controlling the thermal conductivity, and reducing the cost, and the amount added thereof is optional depending on the purpose. The composition of the present invention may contain a large amount of inorganic filler, in particular, and the amount added thereof may reach 2000 parts by mass relative to 100 parts by mass of the copolymer. In particular, in the case of adding an inorganic filler, it is preferable to use a known surface modifier, for example, a silane coupling agent. In particular, for the purpose of producing a composition excellent in low dielectric constant and low dielectric loss, which is one of the objects of the present invention, boron nitride (BN) is preferred as the inorganic filler. From the viewpoint of low dielectric properties, since the dielectric constant may increase high with a large amount of addition or compounding, in particular, the filler in amount of preferably less than 500 parts by mass, more preferably less than 400 parts by mass, relative to 100 parts by mass of the copolymer, is used. In order to improve the low dielectric properties (low dielectric constant and low dielectric loss tangent), a hollow filler or a filler having a shape with many voids may be added.

Alternatively, an organic filler such as high molecular weight polyethylene, ultra-high molecular weight polyethylene, polystyrene, styrenedivinylbenzene copolymer and a fluorine-based resin may be used instead of inorganic fillers. Fluororesins may be any known resin containing fluorine such as PTFE (polytetrafluoroethylene) and PFA (perfluoroalkoxyalkane), and example thereof include Fluon+ (registered trademark) EA-2000 manufactured by AGC Inc. In the case where the melting point or glass transition temperature of the organic filler is lower than the solder reflow temperature of 290°C, it is preferable that the organic filler itself be crosslinked from the viewpoint of heat resistance, and it is preferable that the organic filler be compounded in a form of fine particles or powder. These organic fillers also may suppress the increase in dielectric constant and dielectric tangent.

Meanwhile, in the composition of the present invention, a high dielectric constant insulating filler having a dielectric constant at 1 GHz of preferably 3 to 10000, more preferably 5 to 10000, may be mixed and dispersed to prepare an insulating cured product having a high dielectric constant insulating layer having a dielectric constant of preferably 2.5 to 20, more preferably 2.8 to 10, with suppressed increase in dielectric tangent (dielectric loss). With increase in the dielectric constant of the film made of insulating cured product, downsizing of a circuit and increase in capacity of a capacitor may be achieved, which contribute to downsizing of electric components for high frequencies. The high dielectric constant and low dielectric tangent insulating layer is suitable for applications such as capacitors, inductors for resonant circuits, filters, and antennas. Examples of the high dielectric constant insulating filler used in the present invention include inorganic fillers and insulated metal particles. Specific examples include known high dielectric constant inorganic fillers such as barium titanate and strontium titanate, and other examples are specifically described in, for example, Japanese Patent Application Laid-Open No. 2004-087639.

### Other additives

The composition may further contain one or more selected from flame retardants and surface modifiers. The composition of the present invention may be a matrix of cured products and may have excellent filling properties of other materials when cured, so that even after curing, a cured product of the composition containing one or more selected from these fillers, flame retardants and surface modifiers easily exhibits impact resistance and toughness.

### Flame retardants

A known flame retardant may be used in the composition of the present invention. Preferred flame retardants are known organic phosphorus-based flame retardants such as phosphoric acid esters or condensates thereof, known bromine-based flame retardants, and red phosphorus, from the viewpoint of maintaining low dielectric constant and low dielectric tangent. In particular, among phosphoric acid esters, a compound having a plurality of xylenyl groups in the molecule is preferred from the viewpoint of flame retardancy and low dielectric tangent property.

In addition to the flame retardants, flame retardant aids including antimony compounds such as antimony trioxide, antimony tetroxide, antimony pentoxide and sodium antimonate, or nitrogen-containing compounds such as melamine, triallyl-1 ,3,5-triazine-2,3,4-(1H,3H,5H)-trione, and 2,4,6-triallyloxy-1,3,5-triazine may be added. In general, the total amount of these flame retardants and flame retardant aids is preferably 1 to 100 parts by mass relative to 100 parts by mass of the composition. Alternatively, 30 to 200 parts by mass of the polyphenylene ether (PPE)-based resin excellent in low dielectric constant and flame retardancy may be used relative to 100 parts by mass of the flame retardant.

### Surface modifiers

The composition of the present invention may contain various surface modifiers for the purpose of improving adhesion to fillers, copper plates, and wiring. The amount of the surface modifier used is preferably 0.01 to 10 parts by mass, more preferably 0.1 to 5 parts by mass, relative to 100 parts by mass of the composition of the present invention other than the surface modifier. Examples of the surface modifier include various silane coupling agents and titanate-based coupling agents. One or a plurality of various silane coupling agents and titanate-based coupling agents may be used.

**In** the present invention, by changing the compounding ratio of the "resin component", "curing agent", "monomer", "solvent", "filler" or "other additives", the fluidization temperature of the curable resin or the composition may be adjusted according to the purpose and molding method. Specifically, the composition of the present invention may take various product forms such as "thermoplastic composition", "semi-cured state (i.e., B-stage sheet or the like)", and "varnish".

The composition of the present invention may be obtained by mixing/dissolving or melting one or more selected from the "resin component", "curing agent", "monomer", "solvent", "filler" and "other additives". Further, the composition of the present invention may include general additives used for usual resins, such as lubricants, stabilizers, antioxidants, weather resistance agents, and UV absorbers, as long as the purposes of the present invention are not impaired. Any known method may be adopted as the method of mixing, dissolving and melting these.

### Thermoplastic compositions and molded product thereof

In the case where the composition of the present invention includes a copolymer having a molecular weight over a certain level, generally a weight average molecular weight in the range of about 50000 or more, with the predetermined resin components, the properties of a thermoplastic resin may be exhibited. Therefore, under conditions not causing cross-linking, the composition may be molded into a shape such as sheet, tube, strip and pellet, in a substantially uncured state by a known molding method for a thermoplastic resin. The molded product may be cross-linked (cured) then or during molding.

The preferred embodiment of the present composition is as follows. In the case where the composition contains not less than a certain percentage of one or a plurality of resin components selected from the hydrocarbon-based elastomer, polyether-based resin, olefin-aromatic vinyl compound-aromatic polyene copolymer not containing a cyclic olefin, and aromatic polyene-based resin, excluding resins in a liquid state at room temperature, the molding in an uncured state as thermoplastic resin is easy as well. The thermoplastic composition is molded into various shapes such as a sheet in advance by taking advantage of the thermoplasticity at a temperature equal to or lower than the working temperature of the curing agent, and may be cured by heating after combining with a semiconductor device, wiring, or a substrate with lamination on an as needed basis, so as to achieve adhesion.

The composition of the present invention may be provided as a sheet by molding a composition melted by heating at a temperature equal to or less than the working temperature or the decomposition temperature of the curing agent by a known method. Alternatively, the sheet may be molded by extrusion molding with a T-die, double rolling, or extrusion lamination onto a base film. In this case, the formulation of the composition and the mass ratio copolymer/monomer, or the solvent, the resin component, and the flame retardant are selected and adjusted, such that melting is performed at a temperature equal to or less than the working temperature or the decomposition temperature of the curing agent and solidification occurs in the vicinity of room temperature. The sheet in this case is in a substantially uncured state. Then, through various processing and assembling steps, finally, complete curing is performed for a processing time at a temperature equal to or more than the working temperature or the decomposition temperature of the curing agent. Such a method is a general technique used for an ethylene-vinyl acetate resin-based cross-linked sealant sheet of a solar cell (solar power generation device).

### Molded products in semi-cured state (e.g., B-stage sheets)

Further, the composition of the present invention may be also made into a molded product such as a sheet and a tube in a partially cross-linked state, for example, with a part of the curing agent contained therein being reacted to a semi-cured state (so-called "B-stage state"). Here, the semi-cured state is defined as a state in which the proportion of gel content as resin component in the composition of the present invention is more than 20 mass% and 80 mass% or less, independent from the definition of the uncured state. The gel content is a value obtained from measurement in accordance with JIS K6796:1998. For example, semi-curing is achieved by adopting a plurality of curing agents having different curing temperatures and/or curing conditions, so that the melt viscosity and fluidity may be controlled to make the B-stage state. That is, by a first stage curing (partial curing), the present curable resin or composition is formed into an easy-to-handle B-stage sheet, which is laminated on an electronic device or a substrate to be pressure-bonded. Then, a second stage curing (complete curing) may be performed to obtain a final shape. In this case, the formulation of the composition, that is, the mass ratio copolymer/monomer, is selected, and on an as needed basis, a solvent, a resin component, and a flame retardant are added. Then, the composition further containing a curing agent such as a peroxide is partially cured and adjusted to a sheet shape (in the B-stage state). After a device is molded and assembled, complete curing is performed by heating under pressure. As a method for partially curing the composition, a known method may be adopted. For example, according to the method, peroxides having different decomposition temperatures are used in combination. A semi-cured sheet is obtained through a treatment at a temperature at which only one of them substantially acts for a predetermined time. Finally, through a treatment at a temperature at which all the curing agents act for a sufficient time, complete curing is performed.

Further, the molded product may be a sheet. The sheet may be uncured (semi-cured) to an extent that the sheet shape can be maintained, or may be completely cured. The degree of curing of the composition may be quantitatively measured by a known dynamic mechanical analysis (DMA).

### Compositions in varnish form and molded products thereof

The composition of the present invention may be also in a varnish form in viscous liquid state depending on the composition and compounding ratio. For example, by using a sufficient amount of solvent and/or by using an appropriate amount of a liquid monomer, a varnish form may be obtained. In particular, for use as a varnish, it is preferable to add an appropriate solvent to the composition of the present invention. The solvent is used to adjust the viscosity and fluidity of the composition as a varnish. A solvent having a boiling point at a certain level or more is preferred, because the solvent having a high boiling point under atmospheric pressure, that is, low volatility, allows a uniform thickness of the applied film to be produced. The preferred boiling point is approximately 110°C or more and 300°C or less, under atmospheric pressure. Examples of the solvent suitably used for a varnish include toluene, xylene, mesitylene, ethylbenzene, limonene, ethylene glycol methyl ether acetate, ethylene glycol monoethyl ether acetate, and ethylene glycol monobutyl ether. The amount used is preferably in the range of 10 to 2000 parts by mass relative to 100 parts by mass of the composition of the present invention.

The varnish may be, for example, applied to a base material, or a base material may be impregnated with the varnish, and the solvent or the like may be removed by drying or the like, so that the varnish may be made into an uncured or semi-cured molded product. Generally, the molded product is in a sheet, film, or tape form. In the present embodiment, the resulting uncured or semi-cured molded product is cured.

### Curing process

The composition may be cured by a known method by reference to curing conditions (temperature, time and pressure) of the curing agent contained. In the case where the curing agent used is a peroxide, the curing conditions may be determined by reference to the half-life temperature and the like disclosed for each peroxide.

### Cured product of composition

The dielectric constant and the dielectric tangent of the cured product obtained from the composition of the present invention are measured by a known resonator method. In the present specification, the resonator method is performed at a measurement frequency of 40 GHz. The dielectric constant of the cured product is 3.5 or less, and may be preferably 3.5 or less and 2.0 or more, particularly preferably 3.0 or less and 2.0 or more. The dielectric tangent of the cured product is 0.0015 or less, and may be 0.0002 or more and 0.0015 or less, preferably 0.0005 or more and 0.0010 or less. The volume resistivity of the cured product is preferably 1×10¹⁵ Ω·cm or more. These values are preferred values, for example, as an electrically insulating material for high frequencies of 3 GHz or more. Since the copolymer used in the composition of the present invention is relatively soft and has high tensile elongation, the cured product obtained from the composition using the copolymer has relatively high impact resistance and followability to the thermal expansion of a base material while exhibiting sufficient mechanical properties. In other words, the storage elastic modulus of the cured product of the present invention as measured at room temperature (25°C) is preferably 30 GPa or less and 0.1 GPa or more, more preferably less than 30 GPa and 0.1 GPa or more, and still more preferably 1 GPa or more and 20 GPa or less. Also, the storage elastic modulus of the cured product of the present invention as measured at high temperature (280°C) is preferably 1 MPa or more and 1 GPa or less, more preferably 5 MPa or more and 1 GPa or less, and still more preferably 10 MPa or more and 1 GPa or less. Those skilled in the art may prepare a cured product by determining the formulation of the composition having the physical property parameters by reference to the information described in the specification and publicly known materials. The cured product obtained from the composition of the present invention has sufficient heat resistance and mechanical properties at high temperature for practical use even under condition with the monomer and the aromatic polyene as monomer component in the composition suppressed to a certain ratio or less.

### General use of compositions

The composition of the present invention may be used as a base material/substrate such as a single-layer or multi-layer printed circuit board, a flexible printed circuit board, a so-called single-layer or multi-layer CCL (copper clad laminate) substrate or a single-layer or multi-layer FCCL (flexible copper clad laminate) substrate. Further, the composition of the present invention may be used as various electrically insulating materials for wiring, preferably wiring of high frequency signals, such as coverlays, high-frequency transmitting circuits, antennas, solder resists, build-up materials, interlayer insulators, bonding sheets, interlayer adhesives, and bumps for flip chip bonders.

From another point of view, the present invention may provide an electrically insulating material containing an olefin-aromatic vinyl compound-aromatic polyene copolymer (which may be an α-olefin-cyclic olefin-aromatic vinyl compound-aromatic polyene copolymer), having a storage elastic modulus at 250°C of 10 MPa or more and 10 GPa or less, and a dielectric constant of 3.5 or less and 2.0 or more and a dielectric tangent of 0.0015 or less, more preferably 1.2×10⁻³ or less, as measured at 23°C and 40 GHz, as cured product.

In an embodiment of the present invention, a method for producing the copolymer may also be provided. Examples of the production method includes a production method of the copolymer in which monomers of α-olefin, cyclic olefin, and aromatic polyene each are copolymerized by coordination polymerization. In another embodiment, a method for producing a cured product including a step of polymerizing the copolymer using a radical polymerization initiator composed of carbon atoms and hydrogen atoms only, containing no oxygen atoms and no nitrogen atoms in the structure, may be also provided.

Coordination polymerization is a polymerization method with use of a coordination polymerization catalyst including a transition metal compound and a cocatalyst. As the transition metal compound, transition metal compounds including zirconium, hafnium, titanium, iron, nickel, cobalt, or palladium are preferred. In particular, for copolymerizing cyclic olefin monomers, transition metal compounds including zirconium, titanium, nickel, iron, or palladium are preferred. As the coordination polymerization catalyst most preferably used, a coordination polymerization catalyst including the transition metal compound represented by the following general formula (1) and a cocatalyst may be used. More preferably, the production method may include a step of copolymerizing monomers of α-olefin, cyclic olefin, and aromatic vinyl compound and aromatic polyene (when included) each with use of a polymerization catalyst including a transition metal compound represented by the following general formula (1) and a cocatalyst.

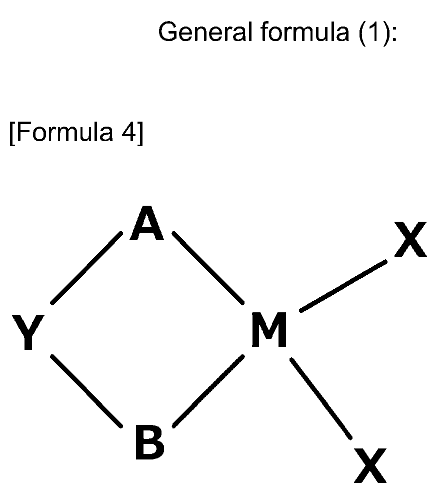

In the above formula, A and B are each independently a group selected from an unsubstituted or substituted cyclopentaphenanthryl group, an unsubstituted or substituted benzoindenyl group, an unsubstituted or substituted cyclopentadienyl group, and an unsubstituted or substituted indenyl group.

Y is a methylene group, silylene group, ethylene group, germylene group or boron residue having bonds to A and B and further having, as a substituent, hydrogen or a hydrocarbon group having 1 to 15 carbon atoms (optionally containing 1 to 3 nitrogen, oxygen, sulfur, phosphorus, or silicon atoms). The substituent may be the same as or different from each other. Y may have a cyclic structure. Most preferably, Y may be a methylene group having bonds to A and B and further having, as a substituent, hydrogen or a hydrocarbon group having 1 to 15 carbon atoms (optionally containing 1 to 3 nitrogen, oxygen, sulfur, phosphorus, or silicon atoms).

X is hydrogen, a halogen, an alkyl group having 1 to 15 carbon atoms, an aryl group having 6 to 10 carbon atoms, an alkylaryl group having 8 to 12 carbon atoms, a silyl group having a hydrocarbon substituent having 1 to 4 carbon atoms, an alkoxy group having 1 to 10 carbon atoms, or a dialkylamide group having an alkyl substituent having 1 to 6 carbon atoms.

M is a transitional metal, and may be preferably zirconium, hafnium, or titanium.

In order to obtain a copolymer having a relatively low molecular weight and a low viscosity when made into a varnish, preferably, A and B in general formula (1) may be each independently a group selected from an unsubstituted or substituted cyclopentadienyl group and an unsubstituted or substituted indenyl group. It is particularly preferable to use a transition metal compound having both an unsubstituted or substituted cyclopentadienyl group and an unsubstituted or substituted indenyl group. In order to obtain a copolymer having a high aromatic polyene content, that is, a copolymer having a large number of vinyl groups and/or vinylene groups derived from aromatic polyene monomer units per number average molecular weight, it is preferable to use a transition metal compound having at least one group selected from an unsubstituted or substituted indenyl group and an unsubstituted or substituted benzoindenyl group. In the case of a copolymer having a high aromatic polyene content, the crosslink density of a cured product obtained by curing may be increased, and for example, a cured product having a storage modulus of 5 MPa or more as measured at 280°C may be obtained.

As the cocatalyst in the polymerization catalyst of the present invention, a known cocatalyst used in combination with a transition metal compound may be used. Preferred examples of the cocatalyst include aluminum compounds and boron compounds. As the aluminum compounds, alumoxanes such as methyl aluminoxane (or referred to as methyl alumoxane or MAO) are suitably used. Alternatively, alkyl aluminums such as triisobutyl aluminum and triethyl aluminum may be used. Examples of the cocatalysts include cocatalysts and alkyl aluminum compounds described in European Patent Application Publication No. 0872492A2, Japanese Patent Laid-Open No. 11-130808, Japanese Patent Laid-Open No. 9-309925, International Publication No. WO 00/20426, European Patent Application Publication No. EP 0985689A1, or Japanese Patent Laid-Open No. 6-184179.

Examples of boron compounds include tris(pentafluorophenyl)borane, triphenylcarbenium tetrakis(pentafluorophenyl)borate {trityl tetrakis(pentafluorophenyl)borate}, lithium tetrakis(pentafluorophenyl)borate, trimethylammonium tetraphenylborate, triethylammonium tetraphenylborate, tripropylammonium tetraphenylborate, tri(n-butyl)ammonium tetraphenylborate, tri(n-butyl)ammonium tetra(p-tolyl)phenylborate, tri(n-butyl)ammonium tetra(p-ethylphenyl)borate, tri(n-butyl)ammonium tetra(pentafluorophenyl)borate, trimethylammonium tetra(p-tolyl)borate, trimethylammonium tetrakis-3,5-dimethylphenylborate, triethylammonium tetrakis-3,5-dimethylphenylborate, tributylammonium tetrakis-3,5-dimethylphenylborate, tributylammonium tetrakis-2,4-dimethylphenylborate, anilinium tetrakis pentafluoro phenylborate, N,N'-dimethylanilinium tetraphenylborate, N,N'-dimethylanilinium tetrakis(p-tolyl)borate, N,N'-dimethylanilinium tetrakis(m-tolyl)borate, N,N'-dimethylanilinium tetrakis tetrakis(2,4-dimethylphenyl)borate, N,N'-dimethylanilinium tetrakis(3,5-dimethylphenyl)borate, N,N'-dimethylanilinium tetrakis(pentafluorophenyl)borate, N,N'-diethylanilinium tetrakis(pentafluorophenyl)borate, N,N'-2,4,5-pentamethylanilinium tetra phenyl borate, N,N'-2,4,5-pentaethylanilinium tetra phenyl borate, di-(isopropyl)ammonium tetrakis pentafluoro phenylborate, dicyclohexylammonium tetraphenylborate, triphenylphosphonium tetraphenylborate, tri(methylphenyl)phosphonium tetra phenyl borate, tri(dimethylphenyl)phosphonium tetraphenylborate, triphenylcarbenium tetrakis(p-tolyl)borate, triphenylcarbenium tetrakis(m-tolyl)borate, triphenyl carbenium tetrakis(2,4-dimethylphenyl)borate, triphenylcarbenium tetrakis(3,5-dimethylphenyl)borate, tropylium tetrakis pentafluoro phenylborate, tropylium tetrakis(p-tolyl)borate, tropylium tetrakis(m-tolyl)borate, tropylium tetrakis(2,4-dimethylphenyl)borate and tropylium tetrakis(3,5-dimethylphenyl)borate. Among these, the most preferred boron cocatalyst is a boron cocatalyst having boron and a fluorine-substituted aromatic group bonded thereto. Examples thereof include tris(pentafluorophenyl)borane, triphenylcarbenium tetrakis(pentafluorophenyl)borate {trityl tetrakis(pentafluorophenyl)borate}, lithium tetrakis(pentafluorophenyl)borate, tri(n-butyl)ammonium tetra(pentafluorophenyl)borate, tropylium tetrakis pentafluoro phenylborate, and N,N'-dimethylanilinium tetrakis(pentafluorophenyl)borate. In addition to the phenyl group exemplified here as fluorine-substituted aromatic group, a condensed aromatic group such as fluorine-substituted naphthyl group may also be preferably used.

The cocatalyst is used at an aluminum atom/transition metal atom ratio of 0.1 to 100000, preferably 10 to 10000, relative to the metal of the transition metal compound. With a ratio of 0.1 or more, the transition metal compound may be effectively activated, while with a ratio of 100000 or less, an economical advantage is achieved. The transition metal compound and the cocatalyst may be mixed and prepared outside the polymerization equipment, or may be mixed inside the equipment during polymerization.

The cocatalyst such as alumoxane, in particular, has an aluminum atom/transition metal atom ratio of preferably 0.1 to 100000, more preferably 10 to 10000, relative to the metal of the transition metal compound. With a ratio of 0.1 or more, the transition metal compound may be effectively activated, and with a ratio of 100000 or less, an economical effect is achieved. With use of a boron compound as cocatalyst, the boron atom/transition metal atom ratio is preferably 0.1 to 100, more preferably 0.1 to 10, and most preferably in the range of 0.8 to 1.2. With a ratio of 0.1 or more, the transition metal compound may be effectively activated, and with a ratio of 100 or less, an economical advantage may be achieved.

In a preferred embodiment, a cocatalyst including a boron compound as essential component and an aluminum compound as an optional component may be used. By using a boron compound as cocatalyst, the amount of metal components such as aluminum derived from aluminum compounds contained in the resulting copolymer may be reduced, so that the values of dielectric constant and dielectric tangent of the resulting uncured copolymer, or the values of dielectric constant and dielectric tangent of the single cured product or composition, may be reduced to particularly preferred ranges. For example, the uncured copolymer may have a dielectric constant reduced to less than 2.3 and the dielectric tangent reduced to less than 0.0004. Further, in the case of using a boron compound as cocatalyst, the resulting cured product of the single copolymer may have a dielectric constant of less than 2.3 and a dielectric tangent of less than 0.0004.

In an embodiment, an uncured α-olefin-cyclic olefin-aromatic polyene copolymer or α-olefin-cyclic olefin-aromatic vinyl compound-aromatic polyene copolymer having a content of metals derived from the catalyst and cocatalyst of 1000 ppm or less, preferably 750 ppm or less, and most preferably 500 ppm or less, in total, may be provided. Here, the content of metals derived from the catalyst and cocatalyst is defined as the sum of respective contents of transition metal elements (as described above) used in the catalyst and the boron and/or aluminum derived from the boron compound and/or aluminum compound used in the cocatalyst, and may be defined as sum of the content of respective elements of zirconium, hafnium, titanium, iron, nickel, palladium, cobalt, boron, and aluminum. Particularly preferably, the metal derived from the catalyst may be zirconium, and the metal derived from the cocatalyst may be aluminum and boron. The content of metals derived from the catalyst and cocatalyst may be the sum of the respective contents of these zirconium, aluminum, and boron. In the specification, boron is included in the category of metal. The uncured α-olefin-cyclic olefin-aromatic polyene copolymer or α-olefin-cyclic olefin-aromatic vinyl compound-aromatic polyene copolymer having a total content of metals of 1000 ppm or less, preferably 750 ppm or less, and most preferably 500 ppm or less, may exhibit one or more of the following characteristics including a dielectric constant at a measurement frequency of 40 GHz of less than 2.3, a dielectric tangent at a measurement frequency of 40 GHz of less than 0.0004, and a storage modulus of 1000 MPa or more as measured at 25°C. More preferably, the uncured copolymer may have a dielectric constant of less than 2.3 and a dielectric tangent of less than 0.0004 at a measurement frequency of 40 GHz, and a storage modulus of 1000 MPa or more as measured at 25°C.

### EXAMPLES

Hereinafter, the present invention will be described with reference to Examples, though the present invention is not limited to the following Examples.

The copolymers obtained in synthetic examples were analyzed by the following means.

The content of vinyl group units derived from ethylene, cyclic olefins, and divinylbenzene in a copolymer was determined by a known method based on the resulting peak area intensity in ¹H-NMR measurement and ¹³C-NMR measurement in quantitative mode. The sample was dissolved in heavy 1,1,2,2-tetrachloroethane, and the measurement was performed at 80 to 130°C.

As molecular weight, the number average molecular weight (Mn) in terms of standard polystyrene was determined by GPC (gel permeation chromatography). The measurement was performed under the following conditions.

Column: Two TSK-GEL Multipore HXL-M having a diameter of 7.8 mm and a length of 300 mm (manufactured by Tosoh Corporation) were connected in series for use.
Column temperature: 40°C
Solvent: THF
Liquid flow rate: 1.0 ml/min.
Detector: RI detector

### Viscosity

The viscosity of the copolymer obtained in each Example was determined as follows.

A 25 mass% toluene solution of each copolymer was prepared and measurement was performed at 25°C using a rotational rheometer (MCR302, manufactured by Anton Paar GmbH), and the value at a shear rate of 1 sec⁻¹ was used.

### Gel content

The gel content was determined as insoluble fraction in boiling toluene according to ASTM D2765-84.

### Coefficient of Water absorption

The coefficient of water absorption was measured after immersion in pure water at 23°C for 24 hours in accordance with ASTM D570-98.

### Dielectric constant and dielectric loss (dielectric tangent)

The dielectric tangent was measured by cavity resonator perturbation method (network analyzer 8722ES manufactured by Agilent Technologies, and split cylinder resonator 40 GHz manufactured by Keysight Technologies). The value of a sample having sizes of 0.1 mm × 25 mm × 30 mm cut out from a sheet was as measured at 23°C and 40 GHz. Measurement was performed for both the uncured state and the cured state.

### Measurement of storage elastic modulus

Using a dynamic viscoelasticity measuring apparatus (RSA-G2 manufactured by TA Instruments, or former Rheometric Scientific), measurement was performed at a frequency of 1 Hz, while raising temperature from room temperature (23°C) to measure the storage elastic modulus at 25°C and the storage elastic modulus at 280°C. The sample for measurement (3 mm × 40 mm) was cut out from a sheet with a thickness of about 0.1 mm. Measurement of the storage modulus was performed for both an uncured state and a cured product state. The glass transition temperature was also determined from the peak top temperature of the loss tangent (tan δ) in the uncured state.

The main measurement parameters related to the measurement are as follows.
Measurement frequency: 1 Hz
Rate of temperature rise: 3°C/min
Measurement length of sample: 10 mm
Distortion: 0.1%

### Quantitative analysis of content of metals in copolymer

The content of metals (in the following Examples, the contents of transition metal elements used in the metal catalyst, and boron and aluminum used in the cocatalyst) were determined as follows. Furthermore, the contents of hafnium, titanium, iron, nickel, cobalt and palladium were also quantified.

The measurement was performed by ICP atomic emission spectroscopy under the following conditions in accordance with JIS K 0116:2014.

In a platinum crucible, 0.5 g of the composition to be measured was weighed and incinerated using a hot plate, an electric stove, and an electric furnace (gradually heated to 600°C). To the residue, 0.5 ml of HCl (1+1) (i.e., a mixture of hydrochloric acid and water at a volume ratio of 1:1) and ultrapure water were added, and after heating and dissolving, the test solution was adjusted to 5 ml and quantitatively analyzed by ICP emission spectroscopy (using 5110VDV manufactured by Agilent Technologies).

### Example 1: Production of copolymer P-1

As raw material divinylbenzene (DVB), "Divinylbenzene (96%)" (in liquid state at room temperature, a mixture of meta and para isomers containing 96 mass% divinylbenzene, the remainder being ethylvinylbenzene) manufactured by NIPPON STEEL Chemical & Material Co., Ltd. was used. As raw material, norbornene (concentration: 75%, toluene solution) manufactured by Maruzen Petrochemical Co., Ltd. was used. A small amount of triisobutyl aluminum (TIBA) was added thereto in advance, stirred at room temperature, and then distilled and purified under nitrogen for use. A 10-L polymerization vessel equipped with a heating and cooling jacket and a stirrer was used. First, the inside of the polymerization vessel was thoroughly dried and replaced with nitrogen, and charged with 3 kg of toluene, 1 kg of norbornene as pure substance, and 180 g of divinylbenzene as pure substance. Bubbling with about 20-L of dry nitrogen was then performed at an internal temperature of 50°C. Thereafter, the inside of the polymerization vessel was replaced with ethylene gas, and TIBA (manufactured by KANTO CHEMICAL CO., INC.) was added in an amount of 5 mmol in terms of the number of moles of aluminum and stirred. Further, MMAO (modified MAO; manufactured by Tosoh Finechem Corporation) in an amount of 50 mmol in terms of aluminum was added and stirred. The internal temperature was stabilized at 60°C, and the internal pressure of the polymerization vessel was increased to 0.4 MPaG (gauge) by supplying ethylene and stabilized. Then, from a catalyst tank installed on the polymerization vessel, 100 g of a toluene solution containing 100 µmol of rac-diphenyl methylene(1-indenyl)(cyclopentadienyl)zirconium dichloride (refer to the following formula (2) for the structure) and 2 mmol of TIBA as catalyst was added to the polymerization vessel to initiate polymerization. The ethylene consumed in the polymerization was sequentially replenished, and the polymerization was continued while maintaining the internal temperature at 60°C and the internal pressure at 0.4 MPaG. After about 2 hours of polymerization, when the amount of ethylene consumed reached 200 g, the ethylene gas in the polymerization vessel was discharged and the pressure was returned to normal, and 50 g of isopropanol as polymerization terminator was added to the polymerization vessel to terminate the polymerization. The resulting polymerization liquid was gradually poured into a sufficiently large amount of methanol/acetone mixture solution. The precipitated polymer was collected by stirring and filtering, and thoroughly vacuum-dried at room temperature to obtain ethylene-norbornene-divinylbenzene copolymer P-1.

### Formulation (2)

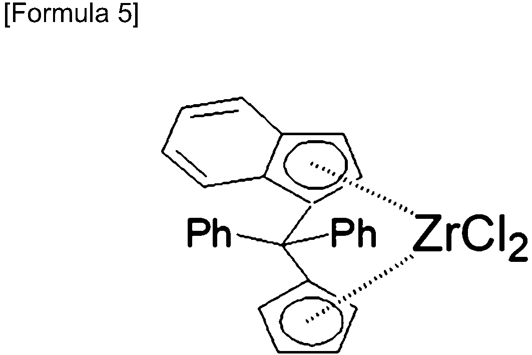

### Example 2: Production of copolymer P-2

Polymerization was performed in the same manner as in the synthesis of P-1, except that the amount of norbornene used was changed to 1.4 kg as pure substance, and the polymerization was terminated when the amount of ethylene consumed reached 100 g, thereby an ethylene-norbornene-divinylbenzene copolymer P-2 was obtained.

### Example 3: Production of copolymer P-3

Polymerization was performed in the same manner as in the synthesis of P-1, except that the amounts of raw materials were changed to 2 kg of toluene, 2 kg of norbornene as pure substance, 300 g of divinylbenzene as pure substance, and 100 mmol of MMAO (modified MAO) manufactured by Tosoh Finechem Corporation in terms of aluminum, and furthermore, the catalyst used was changed to 200 µmol of dimethyl methylenebis(cyclopentadienyl)zirconium dichloride (refer to the following formula (3) for the structure) and 100 g of a toluene solution containing 4 mmol of TIBA. The polymerization was terminated when the amount of ethylene consumed reached 150 g, thereby an ethylene-norbornene-divinylbenzene copolymer P-3 was obtained.

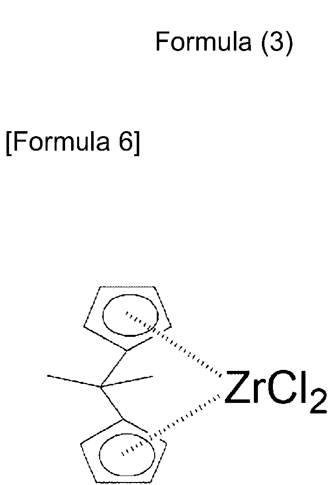

### Example 4: Production of copolymer P-4

As in the synthesis of P-3, dimethyl methylenebis(cyclopentadienyl)zirconium dichloride was used as catalyst, except that MMAO was not used as cocatalyst, and instead, tritium tetrakis(pentafluorophenyl)borate (manufactured by Tosoh Finechem Corporation) was used. That is, a catalyst solution including 200 milliliters of a toluene solution containing 110 micromoles of dimethylmethylene bis(cyclopentadienyl)zirconium dichloride and 2 millimoles of triisobutyl aluminum with 125 micromoles of tritylium tetrakis(pentafluorophenyl)borate dissolved by stirring was added to perform polymerization at an internal polymerization temperature of 90°C. When the amount of ethylene consumed reached 150 g, the polymerization was terminated to obtain an ethylene-norbornene-divinylbenzene copolymer P-4.

Since P-1 to P-4 obtained in the respective Examples contained a small amount of residual monomers and solvent, they were redissolved in toluene, and the solution was gradually poured into a sufficiently large amount of methanol/acetone mixture solution. The precipitated polymer was stirred, filtered, and dried under vacuum at room temperature for 24 hours to obtain a purified polymer. The composition and molecular weight of the resulting P-1 to P-4 are shown in Table 1. The purified polymer was dissolved again in toluene to obtain a 50 mass% toluene solution (varnish). The varnish was applied to a smooth Teflon (registered trademark) plate with an applicator, air-dried at 25°C for 3 hours or more, further dried under vacuum at 120°C for 12 hours, and then dried under vacuum at 200°C for 60 minutes to obtain a transparent sheet with a thickness of 0.1 mm. The sheet was cut into pieces to measure the gel content. From the measurement results of the gel content, it was confirmed that the sheet was in an uncured state. The viscoelastic spectrum (DMA) of the sheet was measured, and the storage modulus at 25°C and the glass transition temperature were measured. The dielectric properties of the sheet were measured. The results are shown in Table 1. It can be seen that the copolymer of the present invention exhibits a high glass transition temperature in the uncured state, with a high storage modulus (25°C), a low dielectric constant and a low dielectric tangent value. In particular, it can be seen that P-4 obtained using a boron compound as cocatalyst exhibits a low dielectric constant and a remarkably low dielectric tangent.

### [Table 1a]

**[Table 1a]**

| | Ethylene content | Norbornene content | DMON content | MPNB content | Styrene content | Ethylvinylbenzene content | Number of vinyl groups in divinylbenzene | Number average molecular weight (Mn) | Gel content | Glass transition temperature (Tg) |
|---|---|---|---|---|---|---|---|---|---|---|
| Copolymer | mass% | mass% | mass% | mass% | mass% | mass% | (pieces/number average molecular weight) | | mass% | °C |
| P-1 | 23 | 65 | - | - | 0 | <0.5 | 17.9 | 18600 | <1 | 106 |
| P-2 | 17 | 70 | - | - | 0 | <0.5 | 13.0 | 13000 | <1 | 145 |
| P-3 | 13 | 83 | - | - | 0 | <0.5 | 8.0 | 29000 | <1 | 180 |
| P-4 | 8 | 88 | - | - | 0 | <0.5 | 7.1 | 27000 | <1 | 182 |
| P-5 | 8 | 84 | - | - | 0 | <0.5 | 11.0 | 29000 | <1 | 190 |
| P-6 | 10 | - | 78 | - | 0 | <0.5 | 3.5 | 9300 | <1 | 203 |
| P-7 | 12 | - | - | 79 | 0 | <0.5 | 7.7 | 11000 | <1 | 186 |
| P-8 | 0 | 75 | - | - | 0 | 4.8 | 9.1 | 10600 | <1 | 210 |
| P-9 | 7 | - | 71 | - | 11 | <0.5 | 3.7 | 7900 | <1 | 200 |

### [Table 1b]

**[Table 1b]**

| | Storage elastic modulus (25°C) | Dielectric constant of copolymer (40 GHz) | Dielectric tangent of copolymer (40 GHz) | Content of metal in copolymer (ppm) | | | | |
|---|---|---|---|---|---|---|---|---|
| Copolymer | MPa | | | Boron | Aluminum | Zirconium | Total of zirconium and aluminum | Content of hafnium, titanium, iron, nickel, cobalt and palladium |
| P-1 | 1890 | 2.3 | 0.0007 | less than 10 ppm | 1600 | 10 | 1610 | In all samples, the content of hafnium, titanium, iron, nickel, cobalt and palladium was less than quantification limit 1.5 ppm. |
| P-2 | 2000 | 2.3 | 0.0007 | less than 10 ppm | 2500 | 15 | 2515 | |
| P-3 | 2260 | 2.2 | 0.0007 | less than 10 ppm | 2400 | 16 | 2416 | |
| P-4 | 2250 | 2.2 | 0.0002 | less than 10 ppm | 180 | 6 | 186 | |
| P-5 | 2300 | 2.1 | 0.0002 | less than 10 ppm | 330 | 30 | 360 | |
| P-6 | 2100 | 2.1 | 0.0002 | less than 10 ppm | 430 | 40 | 470 | |
| P-7 | 2000 | 2.2 | 0.0003 | less than 10 ppm | 530 | 43 | 573 | |
| P-8 | 2230 | 2.2 | 0.0003 | less than 10 ppm | 650 | 33 | 683 | |
| P-9 | 2400 | 2.2 | 0.0003 | less than 10 ppm | 480 | 33 | 513 | |

### Example 5: Preparation of cured sheet

Using a vessel equipped with a heating and cooling jacket and stirring blade, 100 parts by mass of P-1 (ethylene-norbornene-divinylbenzene copolymer) was heated to about 50°C in 100 parts by mass of toluene as solvent and stirred, so that the copolymer was dissolved to prepare a 50 mass% toluene solution (varnish). Furthermore, a curing agent (Perbutyl P) was added in an amount of 1 part by mass in outer percentage to the parts by mass of the copolymer, dissolved, stirred, and mixed to obtain a varnish-like composition (Table 2). The resulting composition was poured into a Teflon (registered trademark) formwork (frame length: 7 cm, width: 7 cm, thickness: 0.2 mm, 0.5 mm or 1.0 mm) on a PET sheet placed on a glass plate, thoroughly air-dried at 25°C, and then further dried in a vacuum dryer at 60°C for 3 hours or more to obtain an uncured sheet. Further, the uncured sheet was heat treated using a press with a Teflon sheet and a Teflon frame placed under a load of 5 MPa, at 120°C for 30 minutes, 150°C for 30 minutes, and then at 200°C for 120 minutes. Then, the Teflon sheet and the Teflon frame were removed to obtain a cured sheet. The gel content, storage modulus (at 25°C and 280°C), dielectric constant, dielectric tangent (both as measured at 23°C and 40 GHz), and coefficient of water absorption of the resulting cured sheet were determined.

### Example 6: Preparation of cured sheet

A cured sheet was obtained in the same manner as in Example 5, and the physical properties were determined in the same manner.

### Examples 7 to 8: Preparation of cured sheet

P-3 and P-4 have a glass transition temperature of 150°C or more, so that it is more difficult to remove residual toluene from the polymer than P-1 and P-2. A cured sheet was obtained as follows, and physical properties thereof were determined in the same manner. Using the same container as in Examples 5 and 6, 100 parts by mass of P-3 or P-4 (ethylene-norbornene-divinylbenzene copolymer) was heated to about 50°C in 100 parts by mass of toluene as solvent, and stirred to dissolve the copolymer, so that a 50 mass% toluene solution (varnish) was prepared. Furthermore, a curing agent (2,3-dimethyl-2,3-diphenylbutane, manufactured by KANTO CHEMICAL CO., INC.) was added in an amount of 1 part by mass in outer percentage to parts by mass of the copolymer, dissolved, stirred, and mixed to obtain a varnish-like composition (Table 2). The resulting composition was poured into a Teflon (registered trademark) formwork (frame length: 7 cm, width: 7 cm, thickness: 0.1 mm) on a PET sheet placed on a glass plate, thoroughly air-dried at 25°C, and then further dried in a vacuum dryer at 100°C for 3 hours to obtain an uncured sheet substantially not containing the solvent. A plurality of the uncured sheets were stacked to a thickness required for each measurement, and a Teflon sheet and Teflon framework were placed under a load of 5 MPa in a vacuum press. The sheets were heated at 250°C for 60 minutes, and the Teflon sheet and Teflon framework were removed to obtain a cured sheet. The gel content, storage modulus (at 25°C and 280°C), dielectric constant, dielectric tangent (both as measured at 23°C and 40 GHz), and coefficient of water absorption of the resulting cured sheet were determined.

In Table 2, the composition (unit in the table: parts by mass) and physical properties (gel content, storage modulus at 25°C and 280°C, dielectric constant, dielectric tangent, and coefficient of water absorption) are shown. In Table 2, the viscosity of the 25 mass% toluene solution (varnish) of each Example is also shown. The cured sheets obtained in Examples 5 to 8 were sufficiently cured with a high gel content shown, and had a storage modulus at room temperature (25°C) that allows a substrate, especially a rigid substrate, to have sufficient hardness. Furthermore, a low dielectric constant and low dielectric tangent value required for a high-frequency insulating material were exhibited. The cured sheets obtained in Examples 5 and 6 exhibited a high storage modulus at high temperatures (280°C) and had high mechanical properties at high temperatures. Furthermore, the viscosity of the 25 mass% toluene solution (varnish) containing the copolymer obtained in both Examples 5 and 6 was 10000 mPa·s or less. The cured sheet obtained in Example 8 exhibited a particularly low dielectric constant (2.1) and dielectric tangent value (0.0002).

### [Table 2]

**[Table 2]**

| | Example 5 | Example 6 | Example 7 | Example 8 |
|---|---|---|---|---|
| P-1 | 100 | - | - | - |
| P-2 | - | 100 | - | - |
| P-3 | - | - | 100 | - |
| P-4 | - | - | - | 100 |
| Solvent (toluene) | 100 | 100 | 100 | 100 |
| Curing agent, perbutyl P | 1 part by mass * | 1 part by mass * | 1 part by mass * | 1 part by mass * |
| Viscosity of 25 mass% toluene solution (varnish)/mPa·s | 2745 | 1446 | unmeasured | unmeasured |
| Gel content/mass% | >95 | >95 | >95 | >95 |
| Storage elastic modulus (25°C)/MPa | 1800 | 1950 | 2200 | 2150 |
| Storage elastic modulus (280°C)/MPa | 9.2 | 12 | 2.2 | 2.1 |
| Dielectric constant (40 GHz) | 2.3 | 2.30 | 2.2 | 2.1 |
| Dielectric tangent (40 GHz) | 0.0009 | 0.0008 | 0.0006 | 0.0002 |
| Coefficient of water absorption/mass% | <0.05 | <0.05 | <0.05 | <0.05 |

| | | | | |
|---|---|---|---|---|
| *To 100 parts by mass of total of raw materials other than curing agent and solvent, 1 part by mass was added. | | | | |

### Example 9: Production of copolymer P-5

Polymerization, polymer collection and post-treatment were performed in the same manner as in the production method of P-4. However, 1.5 kg of norbornene as pure substance, 2.5 kg of toluene and 200 g of divinylbenzene as pure substance were fed therein. A catalyst solution including 210 micromoles of tritylium tetrakis(pentafluorophenyl)borate added to 300 milliliters of a toluene solution containing 200 micromoles of dimethyl methylenebis(cyclopentadienyl)zirconium dichloride and 5 millimoles of triisobutyl aluminum and dissolved with stirring was added as catalyst, and polymerization was performed while maintaining the polymerization temperature at an internal temperature of 60°C and the internal pressure of the polymerization vessel at 0.15 MPaG (gauge) with supply of ethylene. During the process, the same catalyst solution in the same amount was further added. When the amount of ethylene consumed reached 100 g, the polymerization was terminated to obtain an ethylene-norbornene-divinylbenzene copolymer P-5.

### Example 10: Production of copolymer P-6

Polymerization, polymer collection and post-treatment were performed in the same manner as in the production method of P-5. However, 1.5 kg of DMON (1,4,5,8-dimethano-1,2,3,4,4a,5,8,8a-octahydronaphthalene, manufactured by Maruzen Petrochemical Co., Ltd., purity: 98%) was used instead of norbornene. When the amount of ethylene consumed reached 100 g, the polymerization was terminated to obtain an ethylene-MPNB-divinylbenzene copolymer P-6.

### Example 11: Production of copolymer P-7

Polymerization, polymer collection and post-treatment were performed in the same manner as in the production method of P-5. However, 1.5 kg of MPNB (methylphenyl norbornene, manufactured by Maruzen Petrochemical Co., Ltd., purity: 98%) was used instead of norbornene. When the amount of ethylene consumed reached 100 g, the polymerization was terminated to obtain an ethylene-MPNB-divinylbenzene copolymer P-7.

### Example 12: Production of copolymer P-8

As raw material divinylbenzene (DVB), a product "Divinylbenzene (81%)" (in liquid state at room temperature, a mixture of meta and para isomers containing 81 mass% divinylbenzene, the remainder being ethylvinylbenzene) manufactured by NIPPON STEEL Chemical & Material Co., Ltd., was used. To raw material norbornene (concentration: 75%, toluene solution) manufactured by Maruzen Petrochemical Co., Ltd., a small amount of triisobutyl aluminum (TIBA) was added and stirred at room temperature in advance, and then distilled and purified under nitrogen for use. A 10-L polymerization vessel equipped with a heating and cooling jacket and a stirrer was used. First, the inside of the polymerization vessel was sufficiently dried and replaced with nitrogen, and charged with 2 kg of toluene, 1 kg of norbornene as a pure substance, and 2 kg of divinylbenzene as 81% divinylbenzene product. Bubbling with about 20-L of dry nitrogen was performed at an internal temperature of 50°C. Thereafter, the inside of the polymerization vessel was replaced with nitrogen, and TIBA (manufactured by KANTO CHEMICAL CO., INC.) was added in an amount of 6 mmol in terms of the number of moles of aluminum and stirred. The internal temperature was stabilized at 60°C, and the internal pressure of the polymerization vessel was increased to 0.1 MPaG (gauge) by supplying nitrogen. Then, from a catalyst tank installed on the polymerization vessel, a catalyst solution including 210 µmol of tritylium tetrakis(pentafluorophenyl)borate as catalyst added to 100 g of a toluene solution containing 200 µmol of dimethyl methylene bis(cyclopentadienyl)zirconium dichloride and 2 mmol of TIBA, dissolved and stirred, was added into the polymerization vessel to initiate polymerization. The polymerization was continued while maintaining the internal temperature at 60°C and the internal pressure at 0.1 MPaG. After 4 hours of polymerization, 50 g of isopropanol as polymerization terminator was added to the polymerization vessel to terminate the polymerization. The resulting polymerization liquid was gradually poured into a sufficiently large amount of methanol/acetone mixed solution. The precipitated polymer was collected by stirring and filtering, and thoroughly vacuum-dried at room temperature to obtain norbornene-ethylvinylbenzene-divinylbenzene copolymer P-8.

### Example 13: Production of copolymer P-9

A polymerization vessel was charged with 2.2 kg of toluene, 1.5 kg of DMON as pure substance, 300 g of styrene and 200 g of divinylbenzene as pure substances, and copolymerization of ethylene, DMON, styrene and divinylbenzene was performed in the same manner as in the production method of P-6. When the amount of ethylene consumed reached 100 g, the polymerization was terminated, and post-treatment was performed in the same manner to obtain an ethylene-MPNB-ethylvinylbenzene-divinylbenzene copolymer P-9.

In Table 1, the composition, molecular weight, gel content, glass transition temperature, storage modulus at 25°C, dielectric properties, and content of metals in the copolymers of P-5 to P-9 are shown. It can be seen that copolymers P-5 to P-9 obtained using a boron compound as cocatalyst exhibit high glass transition temperature in the uncured state, high storage modulus (25°C), and extremely low dielectric constant and dielectric tangent values.

Copolymers obtained by using DMON or MPNB as cyclic olefin may have a high glass transition temperature even with a relatively small molar content of DMON or MPNB. That is, while the DMON content in P-6 is 52 mol% in terms of molar content, and the MPNB content in P-7 is 46 mol%, which are lower molar contents than the norbornene content in P-5 of 74 mol%, the glass transition temperature of P-6 is 198°C, and the glass transition temperature of P-7 is 186°C, which are approximately equal to 190°C for P-5. With a relatively low molar content of the cyclic olefin component, it becomes easier to replace the remaining monomer components with aromatic vinyl compound units, so that a copolymer with a higher aromatic vinyl compound unit content may be provided. That is, the aromaticity of the copolymer may be enhanced while maintaining a high glass transition temperature, so that the compatibility with other resins and raw materials may be favorably enhanced. An example thereof is shown in P-9. In particular, MPNB is even more preferred in this respect, because the cyclic olefin itself has an aromatic group. Furthermore, copolymers obtained using DMON or MPNB as cyclic olefin are characterized by having a low molecular weight while having high glass transition temperature at the same level. Specifically, by using DMON or MPNB as cyclic olefin, the most preferred number average molecular weight of 12000 or less or less than 12000 may be easily achieved. The ease of reducing the molecular weight is preferred, because a varnish with a lower viscosity may be produced easily.

Since P-5 to P-9 obtained in the respective Examples contained a small amount of residual monomers and solvent, they were redissolved in toluene, and the solution was gradually poured into a sufficiently large amount of methanol/acetone mixture solution. The precipitated polymer was stirred, filtered, and dried under vacuum at room temperature for 24 hours to obtain a purified polymer. The composition and molecular weight of the resulting P-5 to P-9 are shown in Table 1. The purified polymer was dissolved again in toluene to obtain a 50 mass% toluene solution (varnish). The varnish was applied to a smooth Teflon (registered trademark) plate with an applicator, air-dried at 25°C for 3 hours or more, further dried under vacuum at 120°C for 12 hours, and then dried under vacuum at 200°C for 60 minutes to obtain a transparent sheet with a thickness of 0.1 mm. The sheet was cut into pieces to measure the gel content. From the measurement results of the gel content, it was confirmed that the sheet was in an uncured state. The viscoelastic spectrum (DMA) of the sheet was measured, and the storage modulus at 25°C and the glass transition temperature were measured. The dielectric properties of the sheet were measured. The results are shown in Table 1. It may be seen that the copolymer of the present invention exhibits a high glass transition temperature in the uncured state, with a high storage modulus (25°C) and a low dielectric constant and dielectric tangent value. It may be seen that P-5 to P-9 obtained using a boron compound as cocatalyst exhibit a low dielectric constant and a low dielectric tangent.

¹³C-NMR measurement of norbornene-ethylvinylbenzene-divinylbenzene copolymer P-8 was performed to examine the end structures contained therein, and no end structures other than E-1 to E-8 were detected. In addition, the end structures characteristic for cationic polymerization described in International Publication No. WO 2018/181842 (structures designated t1 and t2 in International Publication No. WO 2018/181842) were not detected in P-8.

## Claims

1. An α-olefin-cyclic olefin-aromatic polyene copolymer, having, in an uncured state, a dielectric constant of less than 2.4 and a dielectric tangent of less than 0.0008 at a measurement frequency of 40 GHz, and a storage modulus of 1000 MPa or more as measured at 25°C.

2. An α-olefin-cyclic olefin-aromatic vinyl compound-aromatic polyene copolymer, having, in an uncured state, a dielectric constant of less than 2.4 and a dielectric tangent of less than 0.0008 at a measurement frequency of 40 GHz, and a storage modulus of 1000 MPa or more as measured at 25°C.

3. The copolymer according to claim 1 or 2, wherein the copolymer in an uncured state has the dielectric constant of less than 2.3 and the dielectric tangent of less than 0.0004 at a measurement frequency of 40 GHz.

4. The copolymer according to any one of claims 1 to 3, wherein a total content of metals derived from a catalyst and a cocatalyst contained in the copolymer is 1000 ppm or less.

5. The copolymer according to any one of claims 1 to 4, wherein when cured alone, a cured product of the copolymer has a dielectric constant of less than 3.5 and a dielectric tangent of less than 0.001 at a measurement frequency of 40 GHz.

6. The copolymer according to claim 5, wherein when cured alone, the cured product of the copolymer has a dielectric constant of less than 2.3 and a dielectric tangent of less than 0.0004 at a measurement frequency of 40 GHz.

7. The copolymer according to any one of claims 1 to 6, wherein when cured alone, the cured product of the copolymer has a storage modulus of 1 MPa or more as measured at 280°C.

8. The copolymer according to any one of claims 1 to 7, wherein when cured alone, the cured product of the copolymer has a storage modulus of 5 MPa or more as measured at 280°C.

9. The copolymer according to claim 1, satisfying all the following items (1) to (2) and (4) to (6):
(1) a number average molecular weight of the copolymer is 500 or more and 100000 or less;
(2) the α-olefin unit is an α-olefin having 2 to 20 carbon atoms;
(4) the cyclic olefin unit is a unit of a cyclic olefin monomer having 10 or more and 30 or less carbon atoms, and a content thereof is 30 mass% or more and 99 mass% or less;
(5) the aromatic polyene unit is one or more selected from the group consisting of polyenes having 5 or more and 20 or less carbon atoms and having a plurality of vinyl groups and/or vinylene groups in the molecule, and a content of the vinyl groups and/or the vinylene groups derived from the unit of the aromatic polyene monomer is 2 pieces or more and 30 pieces or less per number average molecular weight; and
(6) a total of the α-olefin unit, the cyclic olefin unit, and the aromatic polyene unit is 100 mass%.

10. The copolymer according to claim 2, satisfying all the following items (1) to (6):
(1) a number average molecular weight of the copolymer is 500 or more and 100000 or less;
(2) the α-olefin unit is an α-olefin having 2 to 20 carbon atoms;
(3) the aromatic vinyl compound unit is an aromatic vinyl compound having 8 or more and 20 or less carbon atoms;
(4) the cyclic olefin unit is a unit of a cyclic olefin monomer having 10 or more and 30 or less carbon atoms, and a content thereof is 30 mass% or more and 99 mass% or less;
(5) the aromatic polyene unit is one or more selected from the group consisting of polyenes having 5 or more and 20 or less carbon atoms and having a plurality of vinyl groups and/or vinylene groups in the molecule, and a content of the vinyl groups and/or the vinylene groups derived from the unit of the aromatic polyene monomer is 2 pieces or more and 30 pieces or less per number average molecular weight; and
(6) a total of the α-olefin unit, the cyclic olefin unit, the aromatic vinyl compound unit, and the aromatic polyene unit is 100 mass%.

11. The copolymer according to any one of claims 1 to 10, wherein the cyclic olefin unit comprises one or more selected from the group consisting of norbornene, methylphenyl norbornene, substituted norbornenes other than methylphenyl norbornene, and dimethanooctahydro naphthalene.

12. The copolymer according to any one of claims 1 to 11, having a glass transition temperature in the range of 100°C or more and 350°C or less.

13. The copolymer according to any one of claims 1 to 12, having a number average molecular weight of 500 or more and less than 30000.

14. A method for producing the copolymer according to any one of claims 1 to 13, the method comprising copolymerizing monomers of an α-olefin, a cyclic olefin, and an aromatic polyene, and an aromatic vinyl compound on an as needed basis, by coordination polymerization using a coordination polymerization catalyst.

15. The method for producing a copolymer according to claim 14, wherein the coordination polymerization catalyst is a polymerization catalyst comprising a transition metal compound represented by the following general formula (1) and a cocatalyst: 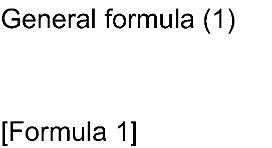 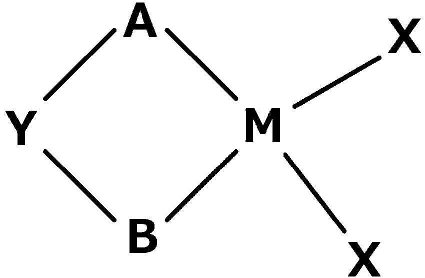
wherein A and B are each independently a group selected from an unsubstituted or substituted cyclopentaphenanthryl group, an unsubstituted or substituted benzoindenyl group, an unsubstituted or substituted cyclopentadienyl group, and an unsubstituted or substituted indenyl group;
Y is a methylene group, silylene group, ethylene group, germylene group or boron residue having bonds to A and B and further having, as a substituent, hydrogen or a hydrocarbon group having 1 to 15 carbon atoms optionally containing 1 to 3 nitrogen, oxygen, sulfur, phosphorus, or silicon atoms; the substituent is the same as or different from each other; and Y optionally has a cyclic structure;
X is hydrogen, a halogen, an alkyl group having 1 to 15 carbon atoms, an aryl group having 6 to 10 carbon atoms, an alkylaryl group having 8 to 12 carbon atoms, a silyl group having a hydrocarbon substituent having 1 to 4 carbon atoms, an alkoxy group having 1 to 10 carbon atoms, or a dialkylamide group having an alkyl substituent having 1 to 6 carbon atoms; and
M is zirconium, hafnium, or titanium.

16. The method according to claim 15, wherein A and B in general formula (1) are each independently a group selected from an unsubstituted or substituted cyclopentadienyl group and an unsubstituted or substituted indenyl group.

17. The method according to claim 15 or 16, wherein a cocatalyst comprising a boron compound is used.

18. The method according to claim 17, wherein the cocatalyst further comprises an aluminum compound.

19. A cured product comprising the copolymer according to any one of claims 1 to 13.

20. A cured product of a composition, the composition comprising:
an α-olefin-cyclic olefin-aromatic polyene copolymer satisfying all the following items (1) to (2) and (4) to (6):
(1) a number average molecular weight of the copolymer is 500 or more and 100000 or less;
(2) the α-olefin unit is an α-olefin having 2 to 20 carbon atoms;
(4) the cyclic olefin unit is a unit of a cyclic olefin monomer having 10 or more and 30 or less carbon atoms, and a content thereof is 30 mass% or more and 99 mass% or less;
(5) the aromatic polyene unit is one or more selected from the group consisting of polyenes having 5 or more and 20 or less carbon atoms and having a plurality of vinyl groups and/or vinylene groups in the molecule, and a content of the vinyl groups and/or the vinylene groups derived from the unit of the aromatic polyene monomer is 2 pieces or more and 30 pieces or less per number average molecular weight; and
(6) a total of the α-olefin unit , the cyclic olefin unit, and the aromatic polyene unit is 100 mass%; and
one or more additive components selected from the group consisting of a resin component, a curing agent, a monomer, a solvent and a filler;
wherein the cured product has a dielectric constant of 3.5 or less and a dielectric tangent of 0.0015 or less at a measurement frequency of 40 GHz.

21. A cured product of a composition, the composition comprising:
an α-olefin-cyclic olefin-aromatic vinyl compound-aromatic polyene copolymer satisfying all the following items (1) to (6):
(1) a number average molecular weight of the copolymer is 500 or more and 100000 or less;
(2) the α-olefin unit is an α-olefin having 2 to 20 carbon atoms;
(3) the aromatic vinyl compound unit is an aromatic vinyl compound having 8 or more and 20 or less carbon atoms;
(4) the cyclic olefin unit is a unit of a cyclic olefin monomer having 10 or more and 30 or less carbon atoms, and a content thereof is 30 mass% or more and 99 mass% or less;
(5) the aromatic polyene unit is one or more selected from the group consisting of polyenes having 5 or more and 20 or less carbon atoms and having a plurality of vinyl groups and/or vinylene groups in the molecule, and a content of the vinyl groups and/or the vinylene groups derived from the unit of the aromatic polyene monomer is 2 pieces or more and 30 pieces or less per number average molecular weight; and
(6) a total of the α-olefin unit, the cyclic olefin unit, the aromatic vinyl compound unit, and the aromatic polyene unit is 100 mass%; and
one or more additive components selected from the group consisting of a resin component, a curing agent, a monomer, a solvent and a filler;
wherein the cured product has a dielectric constant of 3.5 or less and a dielectric tangent of 0.0015 or less at a measurement frequency of 40 GHz.

22. The cured product according to any one of claims 19 to 21, further having a storage modulus of 1000 MPa or more as measured at 25°C and a storage modulus of 1 MPa or more as measured at 280°C.

23. The cured product according to any one of claims 19 to 22, being an electrically insulating material.

24. A CCL substrate, an FCCL substrate, an interlayer insulating material, a coverlay, a high-frequency transmission circuit, or an antenna, comprising the cured product according to claim 23.

25. A method for producing a cured product, the method comprising the step of polymerizing at least the copolymer according to any one of claims 1 to 13 using a radical polymerization initiator, wherein the radical polymerization initiator is composed of carbon atoms and hydrogen atoms only, containing no oxygen atoms and no nitrogen atoms in the structure of the radical polymerization initiator.
